# EUROPEAN PATENT APPLICATION

(11) **EP 3 171 293 A1**
(43) Date of publication of application: **24.05.2017**
(21) Application number: 16190832.2
(22) Date of filing: 27.09.2016
(51) Int. Cl.: G06K 9/00, G06F 3/01

(54) **METHOD AND DEVICE FOR CONTROLLING INTELLIGENT EQUIPMENT**

(30) Priority: 17.11.2015 CN 201510792231
(71) Applicant: Xiaomi Inc., Beijing 100085 (CN)
(72) Inventor: LIU, Huayijun, BEIJING, 100085 (CN); WU, Ke, BEIJING, 100085 (CN); ZHANG, Pengfei, BEIJING, 100085 (CN)
(74) Representative: Fontenelle, Sandrine

(57) **Abstract**

Methods and devices for controlling intelligent equipment are provided. The method includes: when an image acquisition request sent from an intelligent mattress through transfer equipment is received, performing image acquisition on a position where the intelligent mattress is located to obtain a first image, the image acquisition request being triggered when a user uses the intelligent mattress (201); determining eyeball information of the user and determining equipment identification information on the basis of the first image, wherein the equipment identification information is for determining target intelligent equipment to be controlled(202); and sending the equipment identification information and the eyeball information to the transfer equipment to enable the transfer equipment to control the target intelligent equipment on the basis of the equipment identification information and the eyeball information(203).

## Description

### TECHNICAL FIELD

The embodiments of the present invention generally relate to the field of intelligent homes, and more particularly, to a method and device for controlling intelligent equipment.

### BACKGROUND

Along with development of an intelligent home technology, more and more intelligent equipment marches into users' life, and also influences users' life. To free a user from tedious operation over intelligent equipment and facilitate the use of intelligent equipment, there is absolutely a need for a method for controlling intelligent equipment. However, a user now substantially controls intelligent equipment through a remote controller of the intelligent equipment in a related technology, and for example, when the intelligent equipment is an intelligent air conditioner, the user may control turning-on, turning-off, heating, cooling and the like of the intelligent air conditioner through a remote controller of the intelligent air conditioner.

The embodiments of the present invention are presented to solve the problem in the related technology that a user needs to use a remote controller to control intelligent equipment, which is tedious operation and not convenient for the use of intelligent equipment.

### SUMMARY

Accordingly, the embodiments of the present invention provide methods and devices for controlling intelligent equipment.

According to a first aspect of the embodiment of the present invention, a method for controlling intelligent equipment is provided, which may include:
receiving an image acquisition request sent from an intelligent mattress, wherein the image acquisition request containing an identifier (ID) of the intelligent mattress and the image acquisition request being triggered when a user uses the intelligent mattress;
sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured (i.e. suitable for) to determine target intelligent equipment to be controlled; and
controlling the target intelligent equipment on the basis of the equipment identification information and the eyeball information.

Accordingly, the user may control the target intelligent equipment without a remote controller, the intelligent equipment may be controlled more conveniently and easily, and user experiences in control over the target intelligent equipment are improved.

With reference to the first aspect, in a first possible implementation mode of the first aspect, the step of controlling the target intelligent equipment on the basis of the equipment identification information and the eyeball information may include:
determining the target intelligent equipment on the basis of the equipment identification information; and
controlling the target intelligent equipment on the basis of the eyeball information.

With reference to the first possible implementation mode of the first aspect, in a second possible implementation mode of the first aspect, the step of determining the target intelligent equipment on the basis of the equipment identification information may include:
when the equipment identification information is a second image, selecting a target image matched with the second image from a stored image library, wherein the second image being obtained by performing image acquisition by the intelligent photographing equipment on a position to which a sight direction points; and
determining intelligent equipment in the target image as the target intelligent equipment.

With reference to the first possible implementation mode of the first aspect, in a fifth possible implementation mode of the first aspect, the step of controlling the target intelligent equipment on the basis of the eyeball information may include:
acquiring corresponding control operation from a stored corresponding relationship between eyeball information and control operation on the basis of the eyeball information; and
controlling the target intelligent equipment on the basis of the acquired control operation.

According to a second aspect of the embodiment of the present invention, a method for controlling intelligent equipment is provided, which may include:
receiving an image acquisition request sent from an intelligent mattress, wherein the image acquisition request containing an ID of the intelligent mattress and the image acquisition request being triggered when a user uses the intelligent mattress;
sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
controlling target intelligent equipment on the basis of the first image and the eyeball information.

In this way, the user may control the target intelligent equipment without a remote controller, the intelligent equipment may be controlled more conveniently and easily, and user experiences in control over the target intelligent equipment are improved.

With reference to the second aspect, the image acquisition request is sent from the intelligent mattress through transfer equipment.

With reference to the second aspect, in a first possible implementation mode of the second aspect, the step of controlling the target intelligent equipment on the basis of the first image and the eyeball information may include:
determining a sight direction of the user according to the first image;
determining the target intelligent equipment on the basis of the sight direction; and
controlling the target intelligent equipment on the basis of the eyeball information.

With reference to the first possible implementation mode of the second aspect, in a second possible implementation mode of the second aspect, the step of determining the sight direction of the user according to the first image may include:
performing face recognition on the first image to obtain a position where an eye of the user is located; and
performing sight recognition on the eye of the user to obtain the sight direction of the user on the basis of the position where the eye of the user is located.

With reference to the second possible implementation mode of the second aspect, in a third possible implementation mode of the second aspect, the step of performing sight recognition on the eye of the user to obtain the sight direction of the user on the basis of the position where the eye of the user is located may include:
determining an eye pupil offset angle of an eye pupil of the user relative to a normal sight direction on the basis of the position where the eye of the user is located; and
determining the sight direction of the user on the basis of the eye pupil offset angle.

With reference to the first possible implementation mode of the second aspect, in a fourth possible implementation mode of the second aspect, the step of determining the target intelligent equipment on the basis of the sight direction may include:
determining a first included angle between the sight direction and a horizontal direction, and determining a second included angle between the sight direction and a specified direction;
acquiring a corresponding intelligent equipment ID from a stored corresponding relationship among a first included angle, a second included angle and an intelligent equipment ID on the basis of the first included angle and the second included angle; and
determining intelligent equipment corresponding to the acquired intelligent equipment ID as the target intelligent equipment.

With reference to the first possible implementation mode of the second aspect, in a fifth possible implementation mode of the second aspect, the step of determining the target intelligent equipment on the basis of the sight direction may include:
sending the sight direction to the intelligent photographing equipment to enable the intelligent photographing equipment to perform image acquisition on a position to which the sight direction points to obtain a second image and return the second image; and
when the second image returned by the intelligent photographing equipment is received, determining the target intelligent equipment on the basis of the second image.

With reference to the fifth possible implementation mode of the second aspect, in a sixth possible implementation mode of the second aspect, the step of determining the target intelligent equipment on the basis of the second image may include:
selecting a target image matched with the second image from a stored image library; and
determining intelligent equipment in the target image as the target intelligent equipment.

With reference to the fifth possible implementation mode of the second aspect, in a seventh possible implementation mode of the second aspect, the step of determining the target intelligent equipment on the basis of the second image may include:
recognizing, from the second image, an equipment mark of intelligent equipment in the second image;
acquiring a corresponding intelligent equipment ID from a stored corresponding relationship between an equipment mark and an intelligent equipment ID on the basis of the equipment mark; and
determining intelligent equipment corresponding to the acquired corresponding intelligent equipment ID as the target intelligent equipment.

With reference to the first possible implementation mode of the second aspect, in an eighth possible implementation mode of the second aspect, the step of controlling the target intelligent equipment on the basis of the eyeball information may include:
acquiring corresponding control operation from a stored corresponding relationship between eyeball information and control operation on the basis of the eyeball information; and
controlling the target intelligent equipment on the basis of the acquired corresponding control operation.

According to a third aspect of the embodiment of the present invention, a device for controlling intelligent equipment is provided, which may include:
a receiving module, configured to receive an image acquisition request sent from an intelligent mattress, wherein the image acquisition request containing an ID of the intelligent mattress and the image acquisition request being triggered when a user uses the intelligent mattress;
a sending module, configured to send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured to determine target intelligent equipment to be controlled; and
a control module, configured to control the target intelligent equipment on the basis of the equipment identification information and the eyeball information.

Accordingly, the user may control the target intelligent equipment without a remote controller, the intelligent equipment may be controlled more conveniently and easily, and user experiences in control over the target intelligent equipment are improved.

According to a fourth aspect of the embodiment of the present invention, a device for controlling intelligent equipment is provided, which may include:
a receiving module, configured to receive an image acquisition request sent from an intelligent mattress, wherein the image acquisition request containing an ID of the intelligent mattress and the image acquisition request being triggered when a user uses the intelligent mattress;
a sending module, configured to send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
a control module, configured to control target intelligent equipment on the basis of the first image and the eyeball information.

Accordingly, the user may control the target intelligent equipment without a remote controller, the intelligent equipment may be controlled more conveniently and easily, and user experiences in control over the target intelligent equipment are improved.

With reference to the fourth aspect, the image acquisition request is sent from the intelligent mattress through transfer equipment.

According to a fifth aspect of the embodiment of the present invention, a device for controlling intelligent equipment is provided, which may include:
a processor; and
a memory configured to store instructions executable by the processor,
wherein the processor may be configured to:
receive an image acquisition request sent from an intelligent mattress, the image acquisition request containing an ID of the intelligent mattress and the image acquisition request being triggered when a user uses the intelligent mattress;
send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured to determine target intelligent equipment to be controlled; and
control the target intelligent equipment on the basis of the equipment identification information and the eyeball information.

According to a sixth aspect of the embodiment of the present invention, a device for controlling intelligent equipment is provided, which may include:
a processor; and
a memory configured to store instructions executable by the processor,
wherein the processor may be configured to:
receive an image acquisition request sent from an intelligent mattress, the image acquisition request containing an ID of the intelligent mattress and the image acquisition request being triggered when a user uses the intelligent mattress;
send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
control target intelligent equipment on the basis of the first image and the eyeball information.

In one particular embodiment, the steps of the method for controlling intelligent equipment are determined by computer program instructions.

Consequently, according to a seventh aspect, the invention is also directed to a computer program for executing the steps of a method for controlling intelligent equipment as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general description and detailed description below are only exemplary and explanatory and not intended to limit the present invention.

### BRIEF DESCRIPTION OF THE DRAWINGS

The accompanying drawings, which are incorporated in the specification and constitute a part of this specification, illustrate embodiments consistent with the present invention and, together with the specification, serve to explain the principles of the invention.
Fig. 1 is a structure diagram of a system for controlling intelligent equipment according to an exemplary embodiment.
Fig. 2 is a flow chart showing a first method for controlling intelligent equipment according to an exemplary embodiment.
Fig. 3 is a flow chart showing a second method for controlling intelligent equipment according to an exemplary embodiment.
Fig. 4 is a flow chart showing a third method for controlling intelligent equipment according to an exemplary embodiment.
Fig. 5 is a flow chart showing a fourth method for controlling intelligent equipment according to an exemplary embodiment.
Fig. 6 is a flow chart of a fifth method for controlling intelligent equipment according to an exemplary embodiment.
Fig. 7 is a schematic diagram illustrating an eye pupil offset angle according to an exemplary embodiment.
Fig. 8 is a schematic diagram illustrating a horizontal direction and a specified direction according to an exemplary embodiment.
Fig. 9 is a flow chart of a sixth method for controlling intelligent equipment according to an exemplary embodiment.
Fig. 10 is a block diagram of a first device for controlling intelligent equipment according to an exemplary embodiment.
Fig. 11 is a block diagram of a determination module according to an exemplary embodiment.
Fig. 12 is a block diagram of a first determination unit according to an exemplary embodiment.
Fig. 13 is a block diagram of a second determination unit according to an exemplary embodiment.
Fig. 14 is a block diagram of a second device for controlling intelligent equipment according to an exemplary embodiment.
Fig. 15 is a block diagram of a third device for controlling intelligent equipment according to an exemplary embodiment.
Fig. 16 is a block diagram of a fourth device for controlling intelligent equipment according to an exemplary embodiment.
Fig. 17 is a block diagram of a control module according to an exemplary embodiment.
Fig. 18 is a block diagram of a first kind of determination unit according to an exemplary embodiment.
Fig. 19 is a block diagram of a second kind of determination unit according to an exemplary embodiment.
Fig. 20 is a block diagram of a third kind of determination unit according to an exemplary embodiment.
Fig. 21 is a block diagram of a control unit according to an exemplary embodiment.
Fig. 22 is a block diagram of a fifth device for controlling intelligent equipment according to an exemplary embodiment.
Fig. 23 is a block diagram of a control module according to an exemplary embodiment.
Fig. 24 is a block diagram of a first determination unit according to an exemplary embodiment.
Fig. 25 is a block diagram of a first kind of second determination unit according to an exemplary embodiment.
Fig. 26 is a block diagram of a second kind of second determination unit according to an exemplary embodiment.
Fig. 27 is a block diagram of a control unit according to an exemplary embodiment.
Fig. 28 is a block diagram of a sixth device for controlling intelligent equipment according to an exemplary embodiment.
Fig. 29 is a block diagram of a seventh device for controlling intelligent equipment according to an exemplary embodiment.
Fig. 30 is a block diagram of an eighth device for controlling intelligent equipment according to an exemplary embodiment.
Fig. 31 is a block diagram of a ninth device for controlling intelligent equipment according to an exemplary embodiment.

### DETAILED DESCRIPTION

The exemplary embodiments will be described in details herein and examples of the exemplary embodiments are illustrated in the accompanying drawings. Unless expressed otherwise, the same numbers in different accompanying drawings represent the same or similar elements when the accompanying drawings are described hereinafter. The implementation modes described in the following exemplary embodiments do not represent all the implementation modes consistent with the present invention. On the contrary, they are only examples of devices and methods as described in details in the appended claims and consistent with some aspects of the present invention.

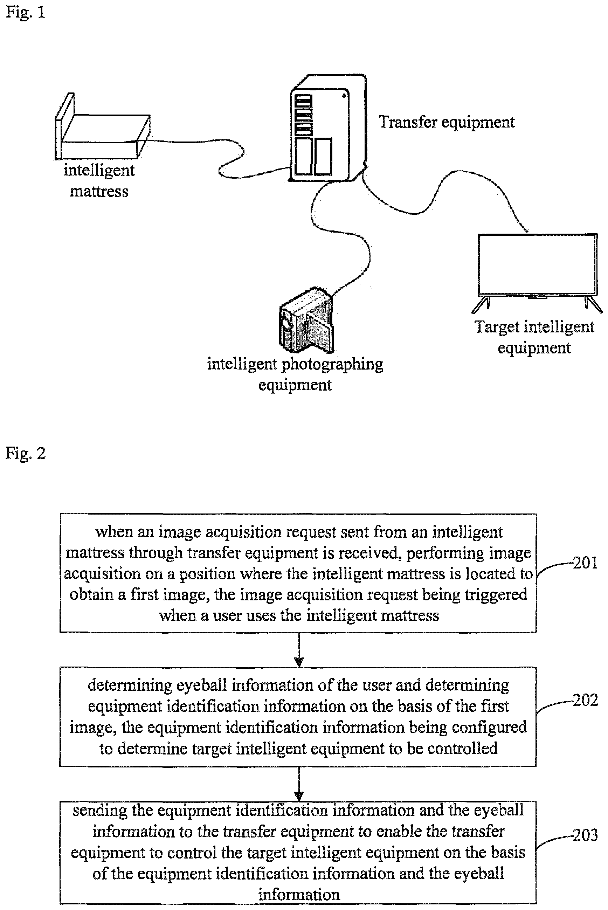

A system structure of the embodiments of the present invention is introduced before the embodiments of the present invention are explained and described in detail. Fig. 1 is a structure diagram of a system for controlling intelligent equipment according to an exemplary embodiment. As shown in Fig. 1, the system for controlling intelligent equipment includes an intelligent mattress, transfer equipment, intelligent photographing equipment and target intelligent equipment, wherein the intelligent mattress, the intelligent photographing equipment and the target intelligent equipment are respectively connected with the transfer equipment by network or BlueTooth (BT), and message interaction among the intelligent mattress, the intelligent photographing equipment and the target intelligent equipment may be implemented through the transfer equipment, wherein the intelligent mattress is configured to trigger a message interaction mechanism among the intelligent mattress, the intelligent photographing equipment and the target intelligent equipment, the intelligent photographing equipment is configured to acquire eyeball information and equipment identification information, and the transfer equipment may control the target intelligent equipment on the basis of the eyeball information.

Fig. 2 is a flow chart showing a first method for controlling intelligent equipment according to an exemplary embodiment. As shown in Fig. 2, the method is applied to intelligent photographing equipment, and includes the following steps:
Step 201: when an image acquisition request sent from an intelligent mattress through transfer equipment is received, performing image acquisition on a position where the intelligent mattress is located to obtain a first image, the image acquisition request being triggered when a user uses the intelligent mattress;
Step 202: determining eyeball information of the user and determining equipment identification information on the basis of the first image, the equipment identification information being configured (i.e. suitable for) to determine target intelligent equipment to be controlled; and
Step 203: sending the equipment identification information and the eyeball information to the transfer equipment to enable the transfer equipment to control the target intelligent equipment on the basis of the equipment identification information and the eyeball information.

In the embodiment of the present invention, the intelligent photographing equipment may receive the image acquisition request sent from the intelligent mattress through the transfer equipment, perform image acquisition and determine the equipment identification information and the eyeball information through the acquired image to enable the transfer equipment to control the target intelligent equipment on the basis of the equipment identification information and the eyeball information, thereby enabling the user to control the target intelligent equipment without a remote controller, making it more convenient and easier to control the intelligent equipment and improving user experiences in control over the target intelligent equipment.

In another embodiment of the present invention, the step of determining the equipment identification information on the basis of the first image includes:
determining a sight direction of the user according to the first image; and
determining the equipment identification information on the basis of the sight direction.

In another embodiment of the present invention, the step of determining the sight direction of the user according to the first image includes:
performing face recognition on the first image to obtain a position where an eye of the user is located; and
performing sight recognition on the eye of the user to obtain the sight direction of the user on the basis of the position where the eye of the user is located.

In another embodiment of the present invention, the step of performing sight recognition on the eye of the user to obtain the sight direction of the user on the basis of the position where the eye of the user is located includes:
determining an eye pupil offset angle of an eye pupil of the user relative to a normal sight direction on the basis of the position where the eye of the user is located; and
determining the sight direction of the user on the basis of the eye pupil offset angle.

In another embodiment of the present invention, the step of determining the equipment identification information on the basis of the sight direction includes:
performing image acquisition on a position to which the sight direction points to obtain a second image, and determining the second image as the equipment identification information; or,
determining a first included angle between the sight direction and a horizontal direction, determining a second included angle between the sight direction and a specified direction, and determining the first included angle and the second included angle as the equipment identification information.

All the above-mentioned optional technical solutions may be freely combined to form the optional embodiments of the present invention, and the combinations will not be repeated in the embodiment of the present invention.

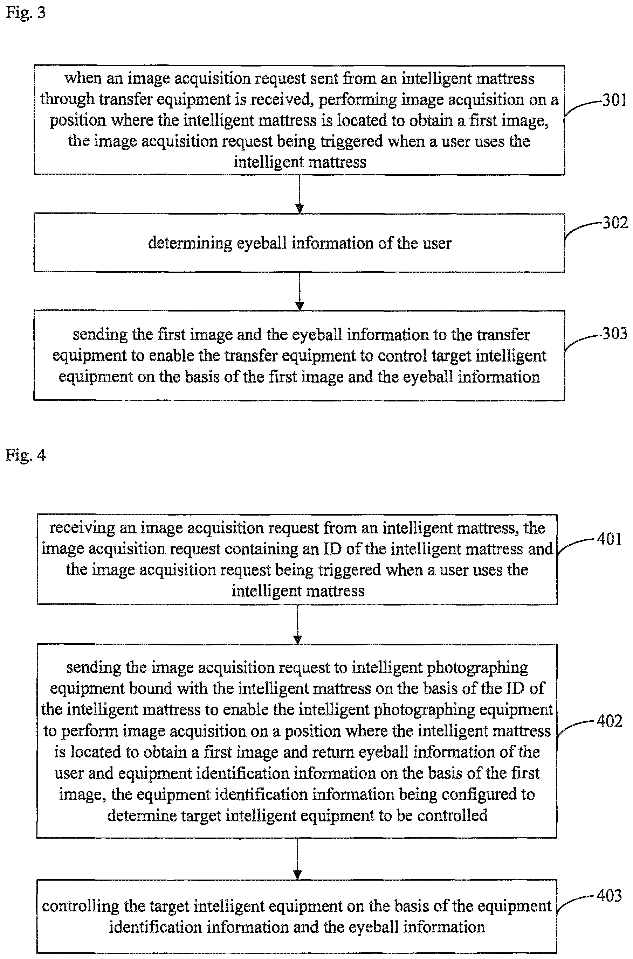

Fig. 3 is a flow chart showing a second method for controlling intelligent equipment according to an exemplary embodiment. As shown in Fig. 3, the method is applied to intelligent photographing equipment, and includes the following steps:
Step 301: when an image acquisition request sent from an intelligent mattress through transfer equipment is received, performing image acquisition on a position where the intelligent mattress is located to obtain a first image, the image acquisition request being triggered when a user uses the intelligent mattress;
Step 302: determining eyeball information of the user; and
Step 303: sending the first image and the eyeball information to the transfer equipment to enable the transfer equipment to control target intelligent equipment on the basis of the first image and the eyeball information.

In the embodiment of the present invention, the intelligent photographing equipment may receive the image acquisition request sent from the intelligent mattress through the transfer equipment, perform image acquisition and determine the eyeball information through the acquired image to enable the transfer equipment to control the target intelligent equipment on the basis of the acquired image and the eyeball information, thereby enabling the user to control the target intelligent equipment without a remote controller, making it more convenient and easier to control the intelligent equipment and improving user experiences in control over the target intelligent equipment.

In another embodiment of the present invention, after the step of sending the first image and the eyeball information to the transfer equipment, the method further includes:
when a sight direction sent by the transfer equipment is received, performing image acquisition on a position to which the sight direction points to obtain a second image, the sight direction being obtained by analyzing the first image by the transfer equipment; and
sending the second image to the transfer equipment.

All the above-mentioned optional technical solutions may be freely combined to form the optional embodiments of the present invention, and the combinations will not be repeated in the embodiment of the present invention.

Fig. 4 is a flow chart showing a third method for controlling intelligent equipment according to an exemplary embodiment. As shown in Fig. 4, the method may be implemented by a transfer equipment, and includes the following steps:
Step 401: receiving an image acquisition request from an intelligent mattress, the image acquisition request containing an ID of the intelligent mattress and the image acquisition request being triggered when a user uses the intelligent mattress;
Step 402: sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured to determine target intelligent equipment to be controlled; and
Step 403: controlling the target intelligent equipment on the basis of the equipment identification information and the eyeball information.

In the embodiment of the present invention, the transfer equipment may receive the image acquisition request from the intelligent mattress, send the request to the intelligent photographing equipment, receive the equipment identification information and eyeball information returned by the intelligent photographing equipment on the basis of the acquired image and control the target intelligent equipment on the basis of the equipment identification information and the eyeball information, so that the user may control the target intelligent equipment without a remote controller, the intelligent equipment may be controlled more conveniently and easily, and user experiences in control over the target intelligent equipment are improved.

In another embodiment of the present invention, the step of controlling the target intelligent equipment on the basis of the equipment identification information and the eyeball information includes:
determining the target intelligent equipment on the basis of the equipment identification information; and
controlling the target intelligent equipment on the basis of the eyeball information.

In another embodiment of the present invention, the step of determining the target intelligent equipment on the basis of the equipment identification information includes:
when the equipment identification information is a second image, selecting a target image matched with the second image from a stored image library, the second image being obtained by performing image acquisition on a position to which a sight direction points by the intelligent photographing equipment; and
determining intelligent equipment in the target image as the target intelligent equipment.

In another embodiment of the present invention, the step of determining the target intelligent equipment on the basis of the equipment identification information includes:
when the equipment identification information is a second image, recognizing from the second image an equipment mark of the intelligent equipment in the second image;
acquiring a corresponding intelligent equipment ID from a stored corresponding relationship between an equipment mark and an intelligent equipment ID on the basis of the equipment mark; and
determining intelligent equipment corresponding to the acquired intelligent equipment ID as the target intelligent equipment.

In another embodiment of the present invention, the step of determining the target intelligent equipment on the basis of the equipment identification information includes:
when the equipment identification information is a first included angle and a second included angle, acquiring a corresponding intelligent equipment ID from a stored corresponding relationship among a first included angle, a second included angle and an intelligent equipment ID on the basis of the first included angle and the second included angle, the first included angle being an included angle between the sight direction of the user and a horizontal direction and the second included angle being an included angle between the sight direction and a specified direction; and
determining intelligent equipment corresponding to the acquired intelligent equipment ID as the target intelligent equipment.

In another embodiment of the present invention, the step of controlling the target intelligent equipment on the basis of the eyeball information includes:
acquiring corresponding control operation from a stored corresponding relationship between eyeball information and control operation on the basis of the eyeball information; and
controlling the target intelligent equipment on the basis of the acquired control operation.

All the above-mentioned optional technical solutions may be freely combined to form the optional embodiments of the present invention, and the combinations will not be repeated in the embodiment of the present invention.

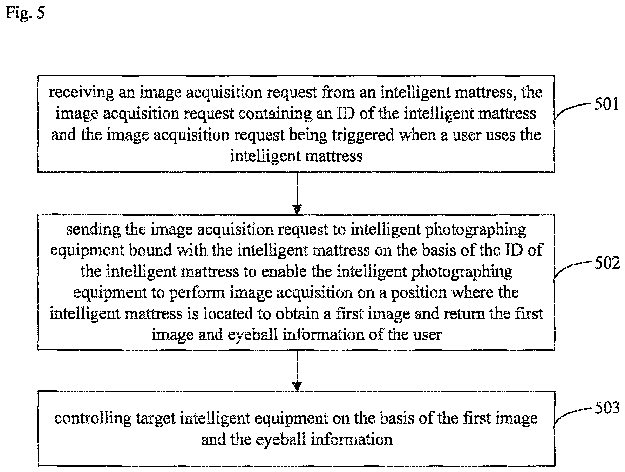

Fig. 5 is a flow chart showing a fourth method for controlling intelligent equipment according to an exemplary embodiment. As shown in Fig. 5, the method may be executed by a transfer equipment, and includes the following steps:
Step 501: receiving an image acquisition request from an intelligent mattress, the image acquisition request containing an ID of the intelligent mattress and the image acquisition request being triggered when a user uses the intelligent mattress;
Step 502: sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
Step 503: controlling target intelligent equipment on the basis of the first image and the eyeball information.

In the embodiment of the present invention, the transfer equipment may receive the image acquisition request from the intelligent mattress, send the request to the intelligent photographing equipment, receive the acquired image and eyeball information returned by the intelligent photographing equipment and control the target intelligent equipment on the basis of the image and the eyeball information, so that the user may control the target intelligent equipment without a remote controller, the intelligent equipment may be controlled more conveniently and easily, and user experiences in control over the target intelligent equipment are improved.

In another embodiment of the present invention, the step of controlling the target intelligent equipment on the basis of the first image and the eyeball information includes:
determining a sight direction of the user according to the first image;
determining the target intelligent equipment on the basis of the sight direction; and
controlling the target intelligent equipment on the basis of the eyeball information.

In another embodiment of the present invention, the step of determining the sight direction of the user according to the first image includes:
performing face recognition on the first image to obtain a position where an eye of the user is located; and
performing sight recognition on the eye of the user to obtain the sight direction of the user on the basis of the position where the eye of the user is located.

In another embodiment of the present invention, the step of performing sight recognition on the eye of the user to obtain the sight direction of the user on the basis of the position where the eye of the user is located includes:
determining an eye pupil offset angle of an eye pupil of the user relative to a normal sight direction on the basis of the position where the eye of the user is located; and
determining the sight direction of the user on the basis of the eye pupil offset angle.

In another embodiment of the present invention, the step of determining the target intelligent equipment on the basis of the sight direction includes:
determining a first included angle between the sight direction and a horizontal direction, and determining a second included angle between the sight direction and a specified direction;
acquiring a corresponding intelligent equipment ID from a stored corresponding relationship among a first included angle, a second included angle and an intelligent equipment ID on the basis of the first included angle and the second included angle; and
determining intelligent equipment corresponding to the acquired intelligent equipment ID as the target intelligent equipment.

In another embodiment of the present invention, the step of determining the target intelligent equipment on the basis of the sight direction includes:
sending the sight direction to the intelligent photographing equipment to enable the intelligent photographing equipment to perform image acquisition on a position to which the sight direction points to obtain a second image and return the second image; and
when the second image returned by the intelligent photographing equipment is received, determining the target intelligent equipment on the basis of the second image.

In another embodiment of the present invention, the step of determining the target intelligent equipment on the basis of the second image includes:
selecting a target image matched with the second image from a stored image library; and
determining intelligent equipment in the target image as the target intelligent equipment.

In another embodiment of the present invention, the step of determining the target intelligent equipment on the basis of the second image includes:
recognizing from the second image an equipment mark of intelligent equipment in the second image;
acquiring a corresponding intelligent equipment ID from a stored corresponding relationship between an equipment mark and an intelligent equipment ID on the basis of the equipment mark; and
determining intelligent equipment corresponding to the acquired intelligent equipment ID as the target intelligent equipment.

In another embodiment of the present invention, the step of controlling the target intelligent equipment on the basis of the eyeball information includes:
acquiring corresponding control operation from a stored corresponding relationship between eyeball information and control operation on the basis of the eyeball information; and
controlling the target intelligent equipment on the basis of the acquired control operation.

All the above-mentioned optional technical solutions may be freely combined to form the optional embodiments of the present invention, and the combinations will not be repeated in the embodiment of the present invention.

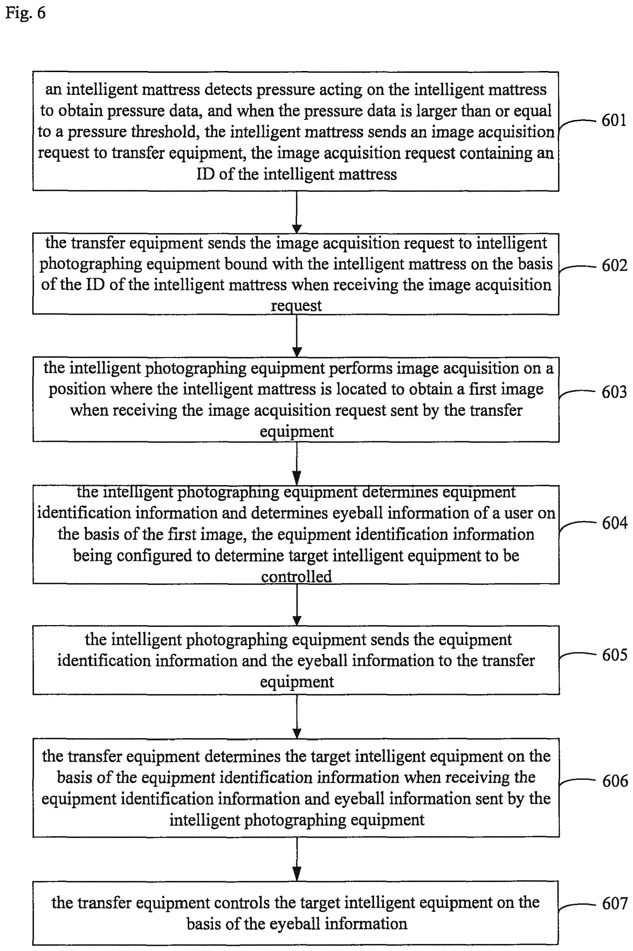

Fig. 6 is a flow chart showing a method for controlling intelligent equipment according to an exemplary embodiment. As shown in Fig. 6, the method includes the following steps.
Step 601: an intelligent mattress detects pressure acting on the intelligent mattress to obtain pressure data, and when the pressure data is larger than or equal to a pressure threshold, the intelligent mattress sends an image acquisition request to transfer equipment, the image acquisition request containing an ID of the intelligent mattress.

Here, a pressure detection device may be arranged in the intelligent mattress, and the intelligent mattress may detect the pressure acting on the intelligent mattress to further obtain the pressure data through the pressure detection device, the pressure detection device, for example, may be a pressure sensor and the like, the pressure data obtained through the pressure sensor may be 30 Newtons, 50 Newtons and the like, and there are no specific limits made in the embodiment of the present invention.

When a user uses the intelligent mattress, higher pressure on the intelligent mattress may be generated, so that the intelligent mattress may judge whether there is a user using the intelligent mattress according to the detected pressure data. When the detected pressure data is larger than or equal to the pressure threshold, it is determined that the pressure acting on the intelligent mattress is higher and it may further be determined that the user is using the intelligent mattress and that the user may lie on the intelligent mattress. In addition, when the user lies on the intelligent mattress, the user usually needs to turn on an intelligent television, reduce temperature of an intelligent air conditioner and the like, so that the intelligent mattress may send the image acquisition request to the transfer equipment.

It is to be noted that the pressure threshold may be set in advance, the pressure threshold may, for example, be 30 kilograms, 40 kilograms, 50 kilograms and the like, and there are no specific limits made in the embodiment of the present invention.

For example, the pressure threshold is 30 kilograms, and when the user uses the intelligent mattress and a body weight of the user is 50 kilograms, the pressure data detected by the intelligent mattress through the pressure detection device is 50 kilograms and the pressure data is larger than the pressure threshold, which indicates that the user is using the intelligent mattress, so that the intelligent mattress may send the image acquisition request to the transfer equipment.

It is also to be noted that an ID is for uniquely identifying an intelligent mattress, that is, the intelligent mattress ID is the ID of the intelligent mattress, and the ID of the intelligent mattress may be a Media Access Control (MAC) address, a factory serial number and the like of the intelligent mattress, which is not specifically limited in the embodiment of the present invention.

In addition, in the embodiment of the present invention, the transfer equipment is configured to implement communication among the intelligent mattress, intelligent photographing equipment and target intelligent equipment, the transfer equipment together with the intelligent mattress, the intelligent photographing equipment and the target intelligent equipment may be located in the same local area network, and the transfer equipment may be a home router, a home server and the like, which is not specifically limited in the embodiment of the present invention.

Moreover, a Wireless Fidelity (WiFi) chip, a BT chip or other wireless communication chips may be arranged in each of the intelligent mattress, the intelligent photographing equipment and the target intelligent equipment, so that the intelligent mattress, the intelligent photographing equipment and the target intelligent equipment may respectively communicate with a server through their own built-in WiFi chips, BT chips or other wireless communication chips, that is, message transmission between the transfer equipment and each of the intelligent mattress, the intelligent photographing equipment and the target intelligent equipment may be implemented by WiFi or BT or in another manner, and there are no specific limits made in the embodiment of the present invention.

Step 602: the transfer equipment sends the image acquisition request to the intelligent photographing equipment bound with the intelligent mattress determined on the basis of the ID of the intelligent mattress when receiving the image acquisition request.

In the embodiment of the present invention, since the transfer equipment may control the target intelligent equipment through eyeball information of the user and the user may control the target intelligent equipment when using the intelligent mattress under a normal condition, it is needed to acquire an image through the intelligent photographing equipment for acquiring the eyeball information of the user, that is, the transfer equipment acquires a corresponding intelligent photographing equipment ID from a stored corresponding relationship between an intelligent mattress ID and an intelligent photographing equipment ID on the basis of the ID of the intelligent mattress in the image acquisition request when the transfer equipment receives the image acquisition request from the intelligent mattress, and determines intelligent photographing equipment corresponding to the acquired intelligent photographing equipment ID as the intelligent photographing equipment bound with the intelligent mattress, thereby sending the image acquisition request to the intelligent photographing equipment.

Here, the corresponding relationship between the ID of the intelligent mattress and the ID of the intelligent photographing equipment may be stored in the transfer equipment when the intelligent mattress is bound with the intelligent photographing equipment. That is, the transfer equipment may receive an equipment binding request before sending the image acquisition request to the intelligent photographing equipment bound with the intelligent mattress determined on the basis of the ID of the intelligent mattress, the equipment binding request containing the ID of the intelligent mattress and the ID of the intelligent photographing equipment, and then the transfer equipment may store the corresponding relationship between the ID of the intelligent mattress and the ID of the intelligent photographing equipment.

It is to be noted that a sender of the equipment binding request may be the intelligent mattress, the intelligent photographing equipment and the like, and may certainly be any intelligent terminal, which is not specifically limited in the embodiment of the present invention. In addition, one intelligent mattress may be bound with one piece of intelligent photographing equipment, or may also be simultaneously bound with multiple pieces of intelligent photographing equipment, which is not specifically limited in the embodiment of the present invention.

In addition, the intelligent photographing equipment ID is configured to uniquely identify the intelligent photographing equipment, that is, the intelligent photographing equipment ID is the ID of the intelligent photographing equipment, and the intelligent photographing equipment ID may be a MAC address, a factory serial number and the like of the intelligent photographing equipment, which is not specifically limited in the embodiment of the present invention.

For example, if the intelligent mattress ID is the factory serial number of the intelligent mattress, the ID of the intelligent photographing equipment is the factory serial number of the intelligent photographing equipment and the ID of the intelligent mattress in the image acquisition request is 0001, then the transfer equipment may acquire the corresponding intelligent photographing equipment IDs 000A and 000B from the corresponding relationship, shown in Table 1, between the intelligent mattress ID and the intelligent photographing equipment ID on the basis of the intelligent mattress ID 0001 and send the image acquisition request to the intelligent photographing equipment with the intelligent photographing equipment IDs 000A and 000B.

**Table 1**

| Intelligent mattress ID | Intelligent photographing equipment ID |
|---|---|
| 0001 | 000A, 000B |
| 0002 | 000C |
| 0003 | 000D, 000E |
| ...... | ...... |

It is to be noted that the corresponding relationship, shown in Table 1, between the intelligent mattress ID and the intelligent photographing equipment ID is only taken as an example for description in the embodiment of the present invention, and Table 1 does not form any limit to the embodiment of the present invention.
Step 603: the intelligent photographing equipment performs image acquisition on a position where the intelligent mattress is located to obtain a first image when receiving the image acquisition request sent by the transfer equipment.

Since the equipment identification information is for determining target intelligent equipment and the equipment identification information may be acquired on the basis of the first image, it is needed to perform image acquisition on the position where the intelligent mattress is located to obtain the first image when the intelligent photographing equipment receives the image acquisition request from the transfer equipment.

In addition, when the user uses the intelligent mattress, the user may lie on the intelligent mattress at different positions and, similarly, probably with different postures, while the first image is required to include a front image of the face of the user, so that multiple pieces of intelligent photographing equipment bound with the intelligent mattress may usually be arranged around the intelligent mattress and the multiple pieces of intelligent photographing equipment simultaneously perform image acquisition to ensure acquisition of the front image of the face of the user. Therefore, with adoption of the multiple pieces of intelligent photographing equipment for acquisition, reliability in the acquisition of the front image of the face of the user may be improved. In other words, as long as the front image of the face of the user is acquired, the first image may be acquired through one piece of intelligent photographing equipment, or may also be acquired through multiple pieces of intelligent photographing equipment, and there are no specific limits made in the embodiment of the present invention.

It is to be noted that the intelligent photographing equipment bound with the intelligent mattress may be arranged at any position around the intelligent mattress, for example, the intelligent photographing equipment may be arranged at a position, such as the head or the tail, of the intelligent mattress, and there are no specific limits made in the embodiment of the present invention.
Step 604: the intelligent photographing equipment determines the eyeball information of the user and determines the equipment identification information on the basis of the first image, wherein the equipment identification information is for determining the target intelligent equipment to be controlled.

The equipment identification information is for determining the target intelligent equipment to be controlled, and in order to control the target intelligent equipment, the intelligent photographing equipment may determine the equipment identification information on the basis of the first image. The operation that the intelligent photographing equipment determines the equipment identification information on the basis of the first image may be implemented as follows: the intelligent photographing equipment determines a sight direction of the user according to the first image, and determines the equipment identification information on the basis of the sight direction.

Here, the operation that the intelligent photographing equipment determines the sight direction of the user according to the first image may be: performing face recognition on the first image to obtain a position where an eye of the user is located; and performing sight recognition on the eye of the user to obtain the sight direction of the user on the basis of the position where eye of the user is located.

The operation that the intelligent photographing equipment performs face recognition on the first image to obtain the position where the eye of the user is located may be: performing body recognition on the first image and performing face recognition on a recognized body, thereby obtaining the position where the eye of the user is located.

Here, the operation of performing sight recognition on the eye of the user to obtain the sight direction of the user on the basis of the position where the eye of the user is located may be implemented as follows: the intelligent photographing equipment determines an eye pupil offset angle of an eye pupil of the user relative to a normal sight direction on the basis of the position where the eye of the user is located, and determines the sight direction of the user on the basis of the eye pupil offset angle.

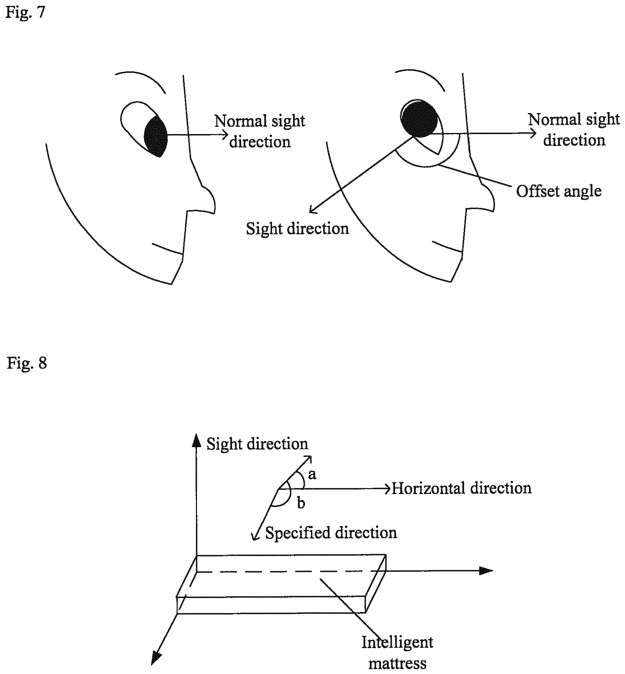

When the intelligent photographing equipment determines the eye pupil offset angle of the eye pupil of the user relative to the normal sight direction, the intelligent photographing equipment determines the normal sight direction of the eye pupil and a current position of the eye pupil in an orbit on the basis of the position where the eye of the user is located, thereby determining the eye pupil offset angle of the eye pupil of the user relative to the normal sight direction. As shown in Fig. 7, the normal sight direction of the eye pupil and the eye pupil offset angle of the eye pupil of the user relative to the normal sight direction are identified in Fig. 7. In addition, the intelligent photographing equipment may determine the eye pupil offset angle of the eye pupil of the left eye of the user relative to the normal sight direction of the left eye, may also determine the eye pupil offset angle of the eye pupil of the right eye of the user relative to the normal sight direction of the right eye, and may further determine the eye pupil offset angles of the eye pupils of double eyes of the user relative to the normal sight directions at the same time, and there are no specific limits made in the embodiment of the present invention.

In addition, the normal sight direction refers to a sight direction of the user when the eye pupil of the user is located at a central position of the orbit, that is, the normal sight direction is a front sight direction of the eye of the user.

Moreover, in the embodiment of the present invention, specific operation processes of face recognition, body recognition and sight recognition refer to the related technology, and will not be specifically described in the embodiment of the present invention.

According to the embodiment of the present invention, target intelligent equipment is controlled through the eyeball information of the user, the eyeball information of the user is usually associated with the sight direction of the user, and the target intelligent equipment is determined on the basis of the equipment identification information, therefore, the intelligent photographing equipment is required to determine the equipment identification information on the basis of the sight direction in order to determine the target intelligent equipment. The operation that the intelligent photographing equipment determines the equipment identification information on the basis of the sight direction may be: performing image acquisition on a position to which the sight direction points to obtain a second image, and determining the second image as the equipment identification information; or, determining a first included angle between the sight direction and a horizontal direction, determining a second included angle between the sight direction and a specified direction, and determining the first included angle and the second included angle as the equipment identification information.

It is to be noted that the horizontal direction refers to a direction where the sight direction is perpendicularly mapped to the horizontal plane, and the specified direction refers to a preset direction, for example, the specified direction is a direction parallel to the head of the intelligent mattress and the like, and there are no specific limits made in the embodiment of the present invention. For example, the horizontal direction and the specified direction may be shown in Fig. 8, and in Fig. 8, included angle a is the first included angle and included angle b is the second included angle.

In addition, the control operation over the target intelligent equipment may be determined on the basis of the eyeball information of the user, and for determining the control operation over the target intelligent equipment, the intelligent photographing equipment is required to determine the eyeball information of the user. The operation that the intelligent photographing equipment determines the eyeball information of the user may be: determining a sight time length for which the sight of the user falls on the target intelligent equipment, and determining the sight time length as the eyeball information of the user.

It is to be noted that the eyeball information is used for determining the control operation over the target intelligent equipment wherein the eyeball information may be the sight time length for which the sight of the user falls on (i.e. looks at) the target intelligent equipment, the sight time length may be 3 seconds, 5 seconds, 10 seconds and the like, and each sight time length corresponds to one control operation. There are no specific limits made in the embodiment of the present invention.

In addition, in the embodiment of the present invention, the eyeball information may be not only the sight time length for which the sight of the user falls on the target intelligent equipment but also a moving direction or rotating direction of the orbit of the user during a practical application (e.g. when used in real life), the moving direction may be a leftward moving direction, a rightward moving direction and the like, the rotating direction may be a rightward rotating direction, a leftward rotating direction and the like, each direction corresponds to one control operation, and there are also no specific limits made in the embodiments of the present invention.
Step 605: the intelligent photographing equipment sends the equipment identification information and the eyeball information to the transfer equipment.

The target intelligent equipment is controlled through the transfer equipment, therefore, the intelligent photographing equipment may send the equipment identification information and the eyeball information to the transfer equipment to enable the transfer equipment to control the target intelligent equipment on the basis of the equipment identification information and the eyeball information.
Step 606: the transfer equipment determines the target intelligent equipment on the basis of the equipment identification information when receiving the equipment identification information and eyeball information from the intelligent photographing equipment.

The content of the equipment identification information may be different, therefore, there are three manners for the transfer equipment to determine the target intelligent equipment on the basis of the equipment identification information.
Manner 1: when the equipment identification information is a second image, the transfer equipment selects a target image matched with the second image from a stored image library, the second image being obtained by performing image acquisition by the intelligent photographing equipment on the position to which the sight direction points, and determines intelligent equipment in the target image as the target intelligent equipment.
   Here, when the equipment identification information is a second image, the operation of selecting the target image matched with the second image from the stored image library may be: performing image recognition on the second image to obtain an image area where the intelligent equipment in the second image is located, selecting an image the same as the image area where the intelligent equipment in the second image is located from the stored image library, and determining the image as the target image; or, determining similarities between the second image and images in the stored image library, selecting from the image library an image of which the similarity with the second image is higher than a similarity threshold on the basis of the determined similarities, and determining the selected image as the target image.
   It is to be noted that the similarity threshold may be preset, and for example, the similarity threshold may be 95%, 90% and the like, which is not specifically limited in the embodiment of the present invention.
Manner 2: when the equipment identification information is a second image, the transfer equipment recognizes, from the second image, an equipment mark of the intelligent equipment in the second image, acquires a corresponding intelligent equipment ID from a stored corresponding relationship between an equipment mark and an intelligent equipment ID on the basis of the equipment mark, and determines intelligent equipment corresponding to the acquired intelligent equipment ID as the target intelligent equipment.

For example, if the equipment mark, recognized from the second image by the transfer equipment, of the intelligent equipment is mark 1, the transfer equipment acquires a corresponding intelligent equipment ID which is ID1 from the corresponding relationship, shown in Table 2, between the equipment mark and the intelligent equipment ID on the basis of mark 1, so that the transfer equipment determines the intelligent equipment corresponding to ID1 as the target intelligent equipment.

**Table 2**

| Equipment mark | Intelligent equipment ID |
|---|---|
| Mark 1 | ID1 |
| Mark 2 | ID2 |
| Mark 3 | ID3 |
| ...... | ...... |

It is to be noted that the corresponding relationship, shown in Table 2, between the equipment mark and the intelligent equipment ID is only taken as an example for description in the embodiment of the present invention, and Table 2 does not form any limit to the embodiment of the present invention.

Here, a recognition manner for the equipment mark of the intelligent equipment in the second image may be an image recognition manner or another recognition manner, which is not specifically limited in the embodiment of the present invention.

It is to be noted that the equipment mark is for uniquely marking the corresponding intelligent equipment, the equipment mark may be preset, and for example, the equipment mark may be a two-dimensional code, a barcode or another recognizable mark, which is not specifically limited in the embodiment of the present invention.

In addition, the intelligent equipment ID is for uniquely identifying the intelligent equipment, the intelligent equipment ID may be preset, and for example, the intelligent equipment ID may be a MAC, a factory serial number and the like, which is not specifically limited in the embodiment of the present invention.

Moreover, the corresponding relationship between an equipment mark and an intelligent equipment ID may also be preset, that is, the transfer equipment may receive a mark setting request before acquiring the corresponding intelligent equipment ID from a stored corresponding relationship between the equipment mark and the intelligent equipment ID on the basis of the equipment mark, the mark setting request containing the equipment mark and the intelligent equipment ID, and then the transfer equipment may store the corresponding relationship between the equipment mark and the intelligent equipment ID.
Manner 3: when the equipment identification information is the first included angle and the second included angle, a corresponding intelligent equipment ID is acquired from a stored corresponding relationship among a first included angle, a second included angle and the intelligent equipment ID on the basis of the first included angle and the second included angle, the first included angle being an included angle between the sight direction of the user and a horizontal direction and the second included angle between an included angle between the sight direction and the specified direction; and intelligent equipment corresponding to the acquired intelligent equipment ID is determined as the target intelligent equipment.

For example, when the first included angle is 10 degrees and the second included angle is 30 degrees, the corresponding intelligent equipment ID which is ID1 is acquired from the corresponding relationship, shown in Table 3, among the first included angle, the second included angle and the intelligent equipment ID on the basis of the first included angle of 10 degrees and the second included angle of 30 degrees, and the intelligent equipment corresponding to the intelligent equipment ID which is ID1 is determined as the target intelligent equipment.

**Table 3**

| First included angle | Second included angle | Intelligent equipment ID |
|---|---|---|
| 10 degrees | 30 degrees | ID1 |
| 45 degrees | 90 degrees | ID2 |
| 10 degrees | 120 degrees | ID3 |
| ...... | ...... | ...... |

It is to be noted that the corresponding relationship, shown in Table 3, among the first included angle, the second included angle and the intelligent equipment ID is only taken as an example for description in the embodiment of the present invention, and Table 1 does not form any limit to the embodiment of the present invention.

In addition, in the embodiment of the present invention, the operation of determining the target intelligent equipment on the basis of the equipment identification information may be implemented by the transfer equipment, or may also be implemented by the intelligent photographing equipment, the embodiment of the present invention is described with the transfer equipment as an example, and there are no specific limits made in the embodiment of the present invention.
Step 607: the transfer equipment controls the target intelligent equipment on the basis of the eyeball information.

There exists a corresponding relationship between eyeball information and control operation over the target intelligent equipment, therefore, the transfer equipment may acquire corresponding control operation from the stored corresponding relationship between the eyeball information and the control operation on the basis of the eyeball information; and the target intelligent equipment is controlled on the basis of the acquired control operation to enable the target intelligent equipment to execute the control operation.

It is to be noted that the corresponding relationship between the eyeball information and the control operation may be preset, that is, the transfer equipment may receive an eyeball and control association request before controlling the target intelligent equipment on the basis of the eyeball information, the eyeball and control association request containing the eyeball information and the control operation, and then the transfer equipment may store the corresponding relationship between the eyeball information and the control operation. For example, the corresponding control operation may be turning off the intelligent equipment when the eyeball information is 3 seconds, the corresponding control operation may be turning on the intelligent equipment when the eyeball information is 5 seconds, and when the intelligent equipment is an intelligent air conditioner, the control operation corresponding to the eyeball information of 10 seconds may be reducing the temperature and the like. There are no specific limits made in the embodiment of the present invention.

In addition, a sender of the eyeball and control association request may be the intelligent mattress, the intelligent photographing equipment and the like, or may certainly be an intelligent terminal, which is not specifically limited in the embodiment of the present invention.

Moreover, if the control operation is operation of only performing switching control on the target intelligent equipment, the operation that the transfer equipment performs switching control on the target intelligent equipment on the basis of the eyeball information may also be implemented as follows: the transfer equipment may send a turning-off message to the target intelligent equipment on the basis of the eyeball information to turn off the target intelligent equipment when the target intelligent is currently in a started state, while the transfer equipment may send a turning-on message to the target intelligent equipment on the basis of the eyeball information to turn on the target intelligent equipment when the target intelligent equipment is currently in a closed state.

Here, a current state of the target intelligent equipment may be stored by the transfer equipment, and the transfer equipment may also update the stored current state of the target intelligent equipment for controlling the target intelligent equipment next time after switching the state of the target intelligent equipment.

For example, when the eyeball information is 3 seconds and the current state of the target intelligent equipment is a started state, the transfer equipment may send a turning-off message to the target intelligent equipment on the basis of the eyeball information to turn off the target intelligent equipment.

In the embodiment of the present invention, when the intelligent mattress detects the pressure data larger than or equal to the pressure threshold, the intelligent photographing equipment may be triggered through the transfer equipment to acquire the image and perform image recognition and sight recognition on the acquired image to enable the transfer equipment to determine the target intelligent equipment and control the target intelligent equipment, so that the user may control the target intelligent equipment without a remote controller, the intelligent equipment may be controlled more conveniently and easily, and user experiences in control over the target intelligent equipment are improved.

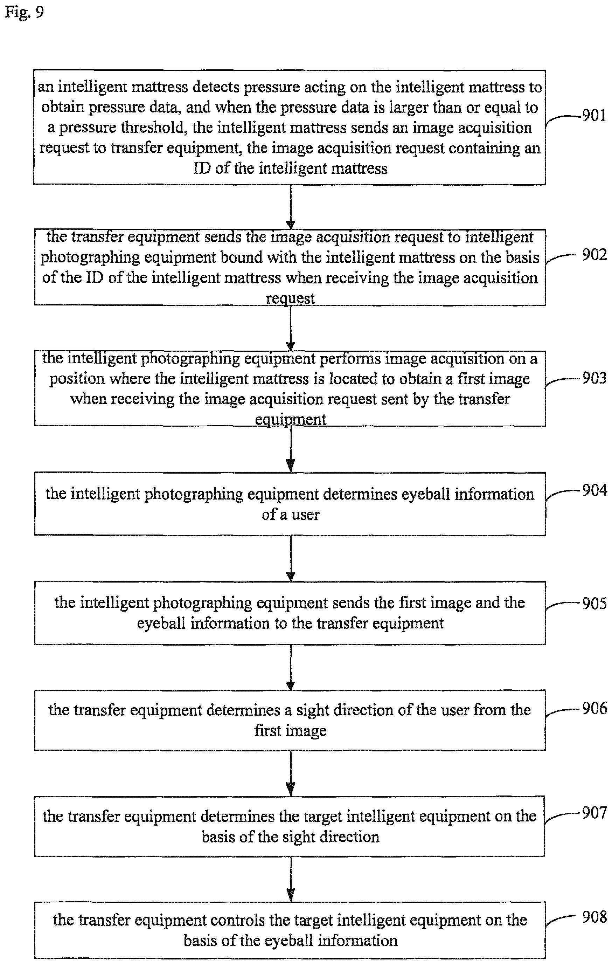

Fig. 9 is a flow chart showing another method for controlling intelligent equipment according to an exemplary embodiment. As shown in Fig. 9, the method includes the following steps.
Step 901: an intelligent mattress detects pressure acting on the intelligent mattress to obtain pressure data, and when the pressure data is larger than or equal to a pressure threshold, the intelligent mattress sends an image acquisition request to transfer equipment, the image acquisition request containing an ID of the intelligent mattress.

A detailed process of the step may refer to Step 601 in the above-mentioned embodiment, and will not be repeated in the embodiment of the present invention.
Step 902: the transfer equipment sends the image acquisition request to intelligent photographing equipment bound with the intelligent mattress determined on the basis of the ID of the intelligent mattress when receiving the image acquisition request.

A detailed process of the step may refer to Step 602 in the above-mentioned embodiment, and will not be repeated in the embodiment of the present invention.
Step 903: the intelligent photographing equipment performs image acquisition on a position where the intelligent mattress is located to obtain a first image when receiving the image acquisition request from the transfer equipment.

A detailed process of the step may refer to Step 603 in the above-mentioned embodiment, and will not be repeated in the embodiment of the present invention.
Step 904: the intelligent photographing equipment determines eyeball information of a user.

There exists a corresponding relationship between eyeball information and control operation over target intelligent equipment, therefore, the intelligent photographing equipment needs to determine the eyeball information of the user in order to determine a control operation over the target intelligent equipment. In the embodiment of the present invention, the operation that the intelligent photographing equipment determines the eyeball information of the user may refer to the operation of determining the eyeball information in Step 604 in the above-mentioned embodiment, and will not be repeated in the embodiment of the present invention.
Step 905: the intelligent photographing equipment sends the first image and the eyeball information to the transfer equipment.

The target intelligent equipment is controlled through the transfer equipment, therefore, the intelligent photographing equipment sends the first image and the eyeball information to the transfer equipment to enable the transfer equipment to control the target intelligent equipment on the basis of the first image and the eyeball information.
Step 906: the transfer equipment determines a sight direction of the user according to the first image.

The operation that the transfer equipment determines the sight direction of the user according to the first image may be implemented as follows: the transfer equipment performs face recognition on the first image to obtain a position where an eye of the user is located, and performs sight recognition on the eye of the user to obtain the sight direction of the user on the basis of the position where the eye of the user is located.

Here, the operation that the transfer equipment performs sight recognition on the eye of the user to obtain the sight direction of the user on the basis of the position where the eye of the user is located may be: determining an eye pupil offset angle of an eye pupil of the user relative to a normal sight direction on the basis of the position where the eye of the user is located; and determining the sight direction of the user on the basis of the eye pupil offset angle.

In the embodiment of the present invention, detailed processes of image recognition and sight recognition may refer to Step 603 in the above-mentioned embodiment, and will not be repeated in the embodiment of the present invention.
Step 907: the transfer equipment determines the target intelligent equipment on the basis of the sight direction.

There are two manners for the transfer equipment to determine the target intelligent equipment on the basis of the sight direction.
Manner 1: a first included angle between the sight direction and a horizontal direction is determined, and a second included angle between the sight direction and a specified direction is determined; a corresponding intelligent equipment ID is acquired from a stored corresponding relationship among a first included angle, a second included angle and an intelligent equipment ID on the basis of the first included angle and the second included angle; and
   intelligent equipment corresponding to the acquired intelligent equipment ID is determined as the target intelligent equipment.
Manner 2: the transfer equipment sends the sight direction to the intelligent photographing equipment to enable the intelligent photographing equipment to perform image acquisition on a position to which the sight direction points to obtain a second image and return the second image; and the target intelligent equipment is determined on the basis of the second image when the second image returned by the intelligent photographing equipment is received.

Here, the operation that the transfer equipment sends the sight direction to the intelligent photographing equipment to perform image acquisition on the position to which the sight direction points to obtain a second image and return the second image may be implemented as follows: the transfer equipment sends the sight direction to the intelligent photographing equipment, and the intelligent photographing equipment performs image acquisition on the position to which the sight direction points to obtain a second image when receiving the sight direction from the transfer equipment, wherein the sight direction is obtained by the transfer equipment by analyzing the first image; and the intelligent photographing equipment sends the second image to the transfer equipment.

There are two manners for the transfer equipment to determine the target intelligent equipment on the basis of the second image when receiving the second image returned by the intelligent photographing equipment.
1) A target image matched with the second image is selected from a stored image library; and intelligent equipment in the target image is determined as the target intelligent equipment.
2) An equipment mark of the intelligent equipment in the second image is recognized from the second image; a corresponding intelligent equipment ID is acquired from a stored corresponding relationship between an equipment mark and an intelligent equipment ID on the basis of the equipment mark; and intelligent equipment corresponding to the acquired intelligent equipment ID is determined as the target intelligent equipment.

A detailed process of the step may refer to Step 606 in the above-mentioned embodiment, and will not be repeated in the embodiment of the present invention.
Step 908: the transfer equipment controls the target intelligent equipment on the basis of the eyeball information.

The operation that the transfer equipment controls the target intelligent equipment on the basis of the eyeball information may be: acquiring corresponding control operation from a stored corresponding relationship between eyeball information and control operation on the basis of the eyeball information; and controlling the target intelligent equipment on the basis of the acquired control operation.

A detailed process of the step may refer to Step 607 in the above-mentioned embodiment, and will not be repeated in the embodiment of the present invention.

In the embodiment of the present invention, when the intelligent mattress receives the pressure data larger than or equal to the pressure threshold, the intelligent photographing equipment may be triggered through the transfer equipment to acquire an image and send the acquired image to the transfer equipment, and the transfer equipment performs image recognition and sight recognition on the acquired image to determine target intelligent equipment and control the target intelligent equipment, so that the user may control the target intelligent equipment without a remote controller, and user experiences in control over the target intelligent equipment are improved.

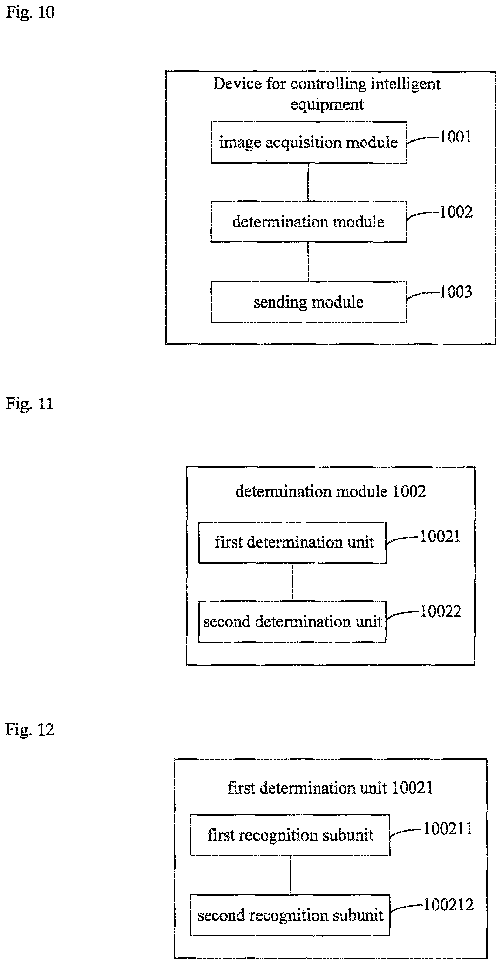

Fig. 10 is a block diagram of a device for controlling intelligent equipment according to an exemplary embodiment. As shown in Fig. 10, the device includes an image acquisition module 1001, a determination module 1002 and a sending module 1003.

The image acquisition module 1001 is configured to, when an image acquisition request sent from an intelligent mattress through transfer equipment is received, perform image acquisition on a position where the intelligent mattress is located to obtain a first image, the image acquisition request being triggered when a user uses the intelligent mattress;
the determination module 1002 is configured to determine eyeball information of the user and determine equipment identification information on the basis of the first image, the equipment identification information being configured to determine target intelligent equipment to be controlled; and
the sending module 1003 is configured to send the equipment identification information and the eyeball information to the transfer equipment to enable the transfer equipment to control the target intelligent equipment on the basis of the equipment identification information and the eyeball information.

In another embodiment of the present invention, the determination module 1002, as shown in Fig. 11, includes:
a first determination unit 10021, configured to determine a sight direction of the user according to the first image; and
a second determination unit 10022, configured to determine the equipment identification information on the basis of the sight direction.

In another embodiment of the present invention, the first determination unit 10021, as shown in Fig. 12, includes:
a first recognition subunit 100211, configured to perform face recognition on the first image to obtain a position where an eye of the user is located; and
a second recognition subunit 100212, configured to perform sight recognition on the eye of the user to obtain the sight direction of the user on the basis of the position where the eye of the user is located.

In another embodiment of the present invention, the second recognition subunit 100212 is specifically configured to:
determine an eye pupil offset angle of an eye pupil of the user relative to a normal sight direction on the basis of the position where the eye of the user is located; and
determine the sight direction of the user on the basis of the eye pupil offset angle.

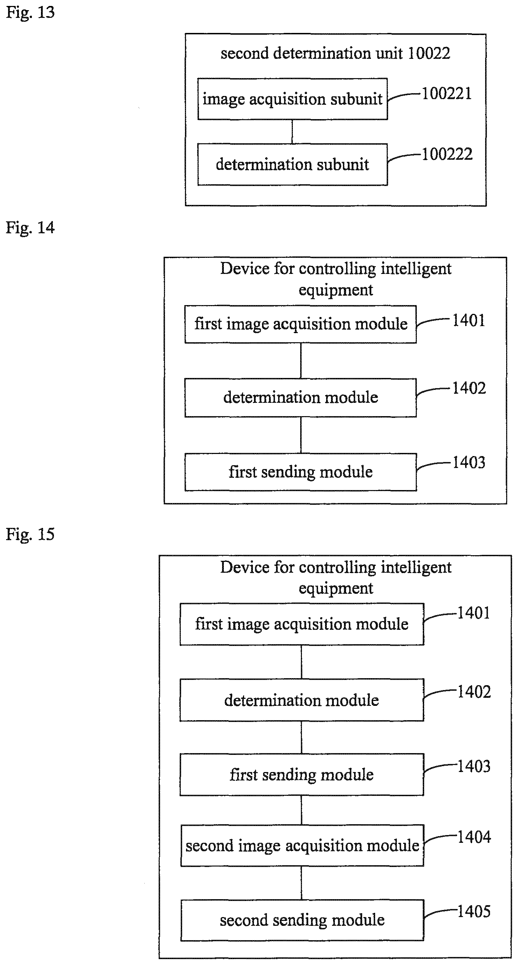

In another embodiment of the present invention, the second determination unit 10022, as shown in Fig. 13, includes:
an image acquisition subunit 100221, configured to perform image acquisition on a position to which the sight direction points to obtain a second image, and determine the second image as the equipment identification information; or,
a determination subunit 100222, configured to determine a first included angle between the sight direction and a horizontal direction, determine a second included angle between the sight direction and a specified direction, and determine the first included angle and the second included angle as the equipment identification information.

In the embodiment of the present invention, the intelligent photographing equipment may receive the image acquisition request from the intelligent mattress through the transfer equipment, perform image acquisition and determine the equipment identification information and the eyeball information through the acquired image to enable the transfer equipment to control the target intelligent equipment on the basis of the equipment identification information and the eyeball information, thereby enabling the user to control the target intelligent equipment without a remote controller, making it more convenient and easier to control the intelligent equipment and improving user experiences in control over the target intelligent equipment.

Fig. 14 is block diagram of another device for controlling intelligent equipment according to an exemplary embodiment. As shown in Fig. 14, the device includes a first image acquisition module 1401, a determination module 1402 and a first sending module 1403.

The first image acquisition module 1401 is configured to, when an image acquisition request sent from an intelligent mattress through transfer equipment is received, perform image acquisition on a position where the intelligent mattress is located to obtain a first image, the image acquisition request being triggered when a user uses the intelligent mattress;
the determination module 1402 is configured to determine eyeball information of the user; and
the first sending module 1403 is configured to send the first image and the eyeball information to the transfer equipment to enable the transfer equipment to control target intelligent equipment on the basis of the first image and the eyeball information.

In another embodiment of the present invention, the device, as shown in Fig. 15, further includes:
a second image acquisition module 1404, configured to, when a sight direction sent by the transfer equipment is received, perform image acquisition on a position to which the sight direction points to obtain a second image, the sight direction being obtained by the transfer equipment by analyzing the first image; and
a second sending module 1405, configured to send the second image to the transfer equipment.

In the embodiment of the present invention, the intelligent photographing equipment may receive the image acquisition request from the intelligent mattress through the transfer equipment, perform image acquisition and determine the eyeball information through the acquired image to enable the transfer equipment to control the target intelligent equipment on the basis of the acquired image and the eyeball information, thereby enabling the user to control the target intelligent equipment without a remote controller, making it more convenient and easier to control the intelligent equipment and improving user experiences in control over the target intelligent equipment.

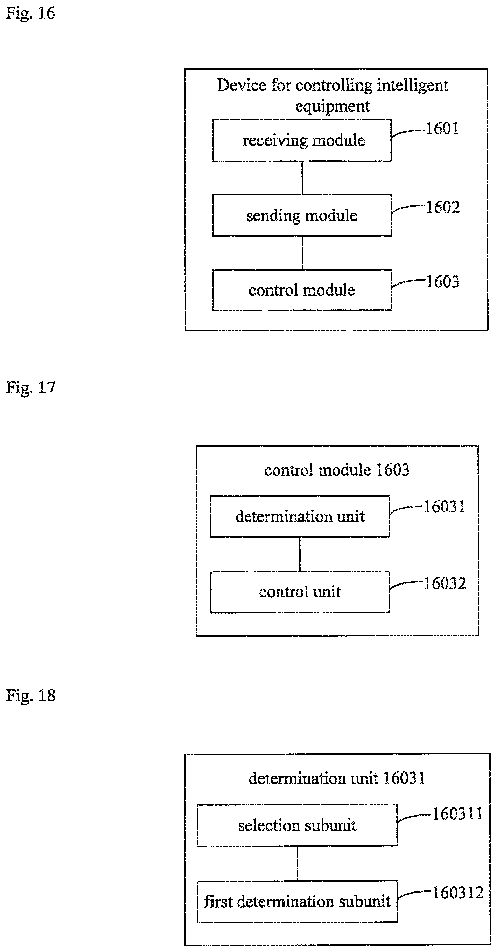

Fig. 16 is a block diagram of another device for controlling intelligent equipment according to an exemplary embodiment. As shown in Fig. 16, the device includes a receiving module 1601, a sending module 1602 and a control module 1603.

The receiving module 1601 is configured to receive an image acquisition request from an intelligent mattress, the image acquisition request containing an ID of the intelligent mattress and the image acquisition request being triggered when a user uses the intelligent mattress;
the sending module 1602 is configured to send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured to determine target intelligent equipment to be controlled; and
the control module 1603 is configured to control the target intelligent equipment on the basis of the equipment identification information and the eyeball information.

In another embodiment of the present invention, the control module 1603, as shown in Fig. 17, includes:
a determination unit 16031, configured to determine the target intelligent equipment on the basis of the equipment identification information; and
the control unit 16032, configured to control the target intelligent equipment on the basis of the eyeball information.

In another embodiment of the present invention, the determination unit 16031, as shown in Fig. 18, includes:
a selection subunit 160311, configured to, when the equipment identification information is a second image, select a target image matched with the second image from a stored image library, the second image being obtained by the intelligent photographing equipment by performing image acquisition on a position to which a sight direction points; and
a first determination subunit 160312, configured to determine intelligent equipment in the target image as the target intelligent equipment.

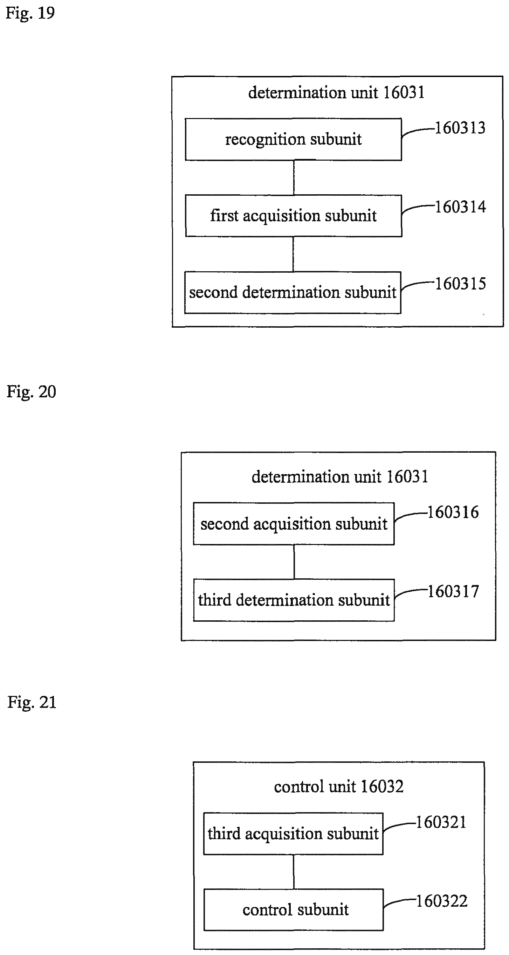

In another embodiment of the present invention, the determination unit 16031, as shown in Fig. 19, includes:
a recognition subunit 160313, configured to, when the equipment identification information is a second image, recognize from the second image an equipment mark of the intelligent equipment in the second image;
a first acquisition subunit 160314, configured to acquire a corresponding intelligent equipment ID from a stored corresponding relationship between an equipment mark and an intelligent equipment ID on the basis of the equipment mark; and
a second determination subunit 160315, configured to determine intelligent equipment corresponding to the acquired intelligent equipment ID as the target intelligent equipment.

In another embodiment of the present invention, the determination unit 16031, as shown in Fig. 20, includes:
a second acquisition subunit 160316, configured to, when the equipment identification information is a first included angle and a second included angle, acquire a corresponding intelligent equipment ID from a stored corresponding relationship among a first included angle, a second included angle and an intelligent equipment ID on the basis of the first included angle and the second included angle, the first included angle being an included angle between the sight direction of the user and a horizontal direction and the second included angle being an included angle between the sight direction and a specified direction; and
a third determination subunit 160317, configured to determine intelligent equipment corresponding to the acquired intelligent equipment ID as the target intelligent equipment.

In another embodiment of the present invention, the first control unit 16032, as shown in Fig. 21, includes:
a third acquisition subunit 160321, configured to acquire corresponding control operation from a stored corresponding relationship between eyeball information and control operation on the basis of the eyeball information; and
a control subunit 160322, configured to control the target intelligent equipment on the basis of the acquired control operation.

In the embodiment of the present invention, the transfer equipment may receive an image acquisition request from the intelligent mattress, send the request to the intelligent photographing equipment, receive equipment identification information and eyeball information returned by the intelligent photographing equipment on the basis of the acquired image and control the target intelligent equipment on the basis of the equipment identification information and the eyeball information, so that the user may control the target intelligent equipment without a remote controller, the intelligent equipment may be controlled more conveniently and easily, and user experiences in control over the target intelligent equipment are improved.

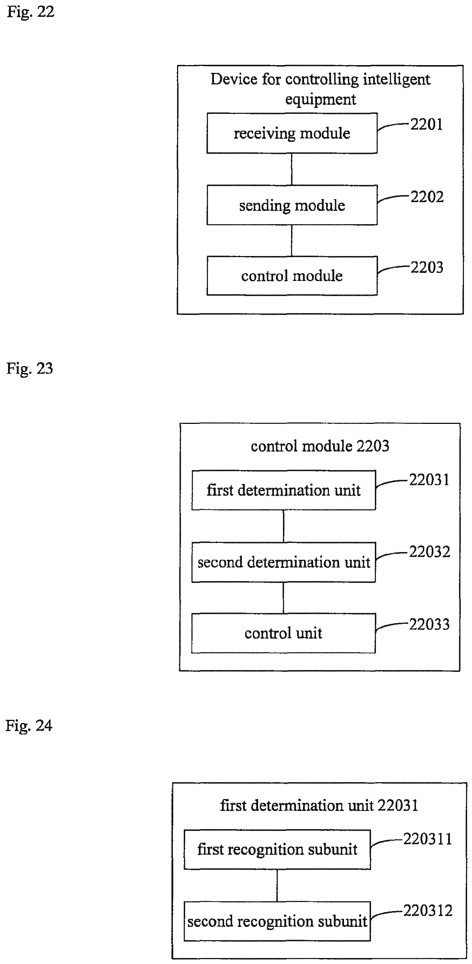

Fig. 22 is a block diagram of another device for controlling intelligent equipment according to an exemplary embodiment. As shown in Fig. 22, the device includes a receiving module 2201, a sending module 2202 and a control module 2203.

The receiving module 2201 is configured to receive an image acquisition request from an intelligent mattress, the image acquisition request containing an ID of the intelligent mattress and the image acquisition request being triggered when a user uses the intelligent mattress;
the sending module 2202 is configured to send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
the control module 2203 is configured to control target intelligent equipment on the basis of the first image and the eyeball information.

In another embodiment of the present invention, the control module 2203, as shown in Fig. 23, includes:
a first determination unit 22031, configured to determine a sight direction of the user according to the first image;
a second determination unit 22032, configured to determine the target intelligent equipment on the basis of the sight direction; and
a control unit 22033, configured to control the target intelligent equipment on the basis of the eyeball information.

In another embodiment of the present invention, the first determination unit 22031, as shown in Fig. 24, includes:
a first recognition subunit 220311, configured to perform face recognition on the first image to obtain a position where an eye of the user is located; and
a second recognition subunit 220312, configured to perform sight recognition on the eye of the user to obtain the sight direction of the user on the basis of the position where the eye of the user is located.

In another embodiment of the present invention, the second recognition subunit 220312 is specifically configured to:
determine an eye pupil offset angle of an eye pupil of the user relative to a normal sight direction on the basis of the position where the eye of the user is located; and
determine the sight direction of the user on the basis of the eye pupil offset angle.

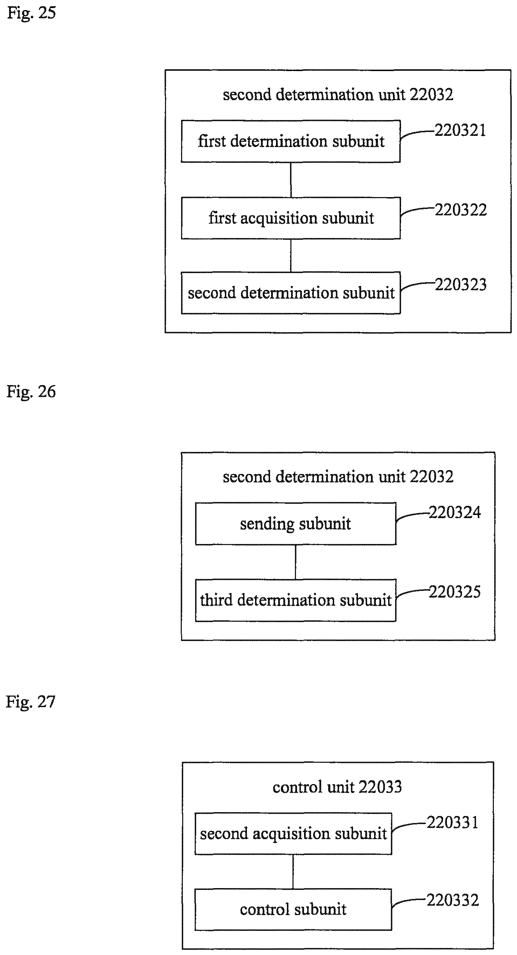

In another embodiment of the present invention, the second determination unit 22032, as shown in Fig. 25, includes:
a first determination subunit 220321, configured to determine a first included angle between the sight direction and a horizontal direction, and determine a second included angle between the sight direction and a specified direction;
a first acquisition subunit 220322, configured to acquire a corresponding intelligent equipment ID from a stored corresponding relationship among a first included angle, a second included angle and an intelligent equipment ID on the basis of the first included angle and the second included angle; and
a second determination subunit 220323, configured to determine intelligent equipment corresponding to the acquired intelligent equipment ID as the target intelligent equipment.

In another embodiment of the present invention, the second determination unit 22032, as shown in Fig. 26, includes:
a sending subunit 220324, configured to send the sight direction to the intelligent photographing equipment to enable the intelligent photographing equipment to perform image acquisition on a position to which the sight direction points to obtain a second image and return the second image; and
a third determination subunit 220325, configured to, when the second image returned by the intelligent photographing equipment is received, determine the target intelligent equipment on the basis of the second image.

In another embodiment of the present invention, the third determination subunit 220325 is specifically configured to:
select a target image matched with the second image from a stored image library; and
determine intelligent equipment in the target image as the target intelligent equipment.

In another embodiment of the present invention, the third determination subunit 220325 is specifically configured to:
recognize, from the second image, an equipment mark of the intelligent equipment in the second image;
acquire a corresponding intelligent equipment ID from a stored corresponding relationship between an equipment mark and an intelligent equipment ID on the basis of the equipment mark; and
determine intelligent equipment corresponding to the acquired intelligent equipment ID as the target intelligent equipment.

In another embodiment of the present invention, the control unit 22033, as shown in Fig. 27, includes:
a second acquisition subunit 220331, configured to acquire corresponding control operation from a stored corresponding relationship between eyeball information and control operation on the basis of the eyeball information; and
a control subunit 220332, configured to control the target intelligent equipment on the basis of the acquired control operation.

In the embodiment of the present invention, the transfer equipment may receive the image acquisition request from the intelligent mattress, send the request to the intelligent photographing equipment, receive the acquired image and eyeball information returned by the intelligent photographing equipment and control the target intelligent equipment on the basis of the image and the eyeball information, so that the user may control the target intelligent equipment without a remote controller, the intelligent equipment may be controlled more conveniently and easily, and user experiences in control over the target intelligent equipment are improved.

With respect to the devices in the above embodiments, the specific manners for performing operations for individual modules therein have been described in detail in the embodiments regarding the related methods, which will not be elaborated herein.

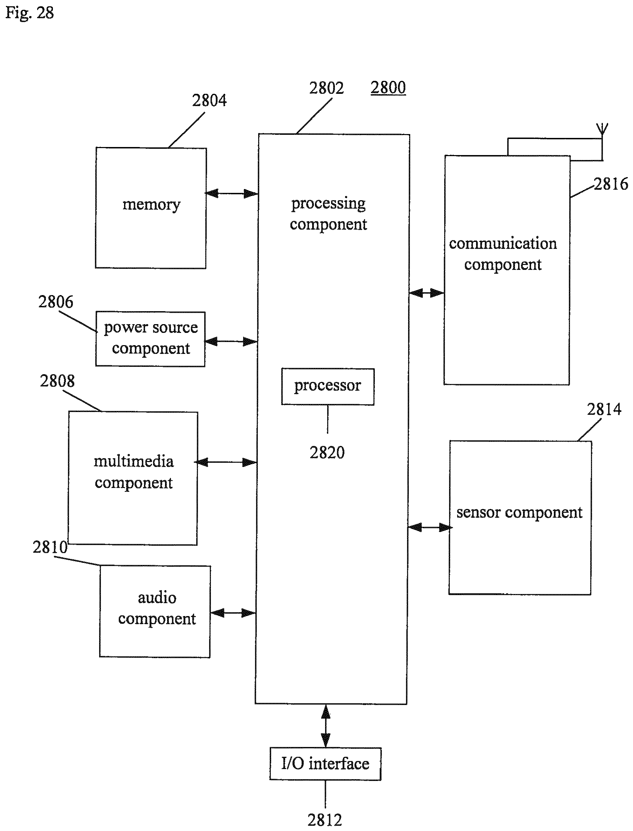

Fig. 28 is a block diagram of a device 2800 for controlling intelligent equipment according to an exemplary embodiment. For example, the device 2800 may be a mobile phone, a computer, a digital broadcast terminal, a message transceiver, a games console, a tablet device, a medical device, fitness equipment, a personal digital assistant, an intelligent camera and the like.

Referring to Fig. 28, the device 2800 may include at least one of the following components: a processing component 2802, a memory 2804, a power source component 2806, a multimedia component 2808, an audio component 2810, an Input/Output (I/O) interface 2812, a sensor component 2814, and a communication component 2816.

The processing component 2802 typically controls overall operations of the device 2800, such as the operations associated with display, data communications, camera operations, and recording operations. The processing component 2802 may include one or more processors 2820 to execute instructions to perform all or part of the steps in the above-mentioned methods. Moreover, the processing component 2802 may include one or more modules which facilitate interaction between the processing component 2802 and other components. For instance, the processing component 2802 may include a multimedia module to facilitate interaction between the multimedia component 2808 and the processing component 2802.

The memory 2804 is configured to store various types of data to support operations at the device 2800. Examples of such data include messages, pictures, video, instructions for any applications or methods operated on the device 2800, etc. The memory 2804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power source component 2806 provides power for various components of the device 2800. The power source component 2806 may include a power management system, one or more power supplies, and other components associated with generation, management and distribution of power for the device 2800.

The multimedia component 2808 includes a screen providing an output interface between the device 2800 and a user. In some embodiments, the screen may include a Liquid Crystal Display (LCD) and a Touch Panel (TP). When the screen includes a TP, the screen may be implemented as a touch screen to receive an input signal from the user. The TP includes one or more touch sensors to sense a touch, a slide and a gesture on the TP. The touch sensors may not only sense a boundary of a touch or slide action, but also sense a duration and pressure associated with the touch or slide action. In some embodiments, the multimedia component 2808 includes a front camera and/or a rear camera. The front camera and/or the rear camera may receive external multimedia data when the device 2800 is in an operation mode, such as a photographing mode or a video mode. Each of the front camera and the rear camera may be a fixed optical lens system or have focusing and optical zooming capabilities.

The audio component 2810 is configured to output and/or input an audio signal. For example, the audio component 2810 includes a microphone (MIC), and the MIC is configured to receive an external audio signal when the device 2800 is in the operation mode, such as a call mode, a recording mode and a voice recognition mode. The received audio signal may be further stored in the memory 2804 or sent through the communication component 2816. In some embodiments, the audio component 2810 further includes a speaker configured to output the audio signal.

The I/O interface 2812 provides an interface between the processing component 2802 and a peripheral interface module. The peripheral interface module may be a keyboard, a click wheel, a button and the like. The button may include, but not limited to: a home button, a volume button, a starting button and a locking button.

The sensor component 2814 includes one or more sensors configured to provide status assessment in various aspects for the device 2800. For instance, the sensor component 2814 may detect an on/off status of the device 2800 and relative positioning of components, such as a display and a keyboard of the device 2800, and the sensor component 2814 may further detect a change in a position of the device 2800 or a component of the device 2800, presence or absence of contact between the user and the device 2800, orientation or acceleration/deceleration of the device 2800 and a change in temperature of the device 2800. The sensor component 2814 may include a proximity sensor configured to detect presence of an object nearby without any physical contact. The sensor component 2814 may also include an optical sensor, such as a Complementary Metal Oxide Semiconductor (CMOS) or Charge Coupled Device (CCD) image sensor, used in an imaging application. In some embodiments, the sensor component 2814 may also include an acceleration sensor, a gyroscope sensor, a magnetic sensor, a pressure sensor or a temperature sensor.

The communication component 2816 is configured to facilitate wired or wireless communication between the device 2800 and other devices. The device 2800 may access a communication-standard-based wireless network, such as a Wireless Fidelity (WiFi) network. In an exemplary embodiment, the communication component 2816 receives a broadcast signal or broadcast associated information from an external broadcast management system through a broadcast channel. In an exemplary embodiment, the communication component 2816 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the device 2800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the above-mentioned methods.

In an exemplary embodiment, there is also provided a non-transitory computer-readable storage medium including an instruction, such as the memory 2804 including an instruction, and the instruction may be executed by the processor 2820 of the device 2800 to implement the above-mentioned methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

A non-transitory computer-readable storage medium is provided, when the instructions in the storage medium are executed by a processor of intelligent photographing equipment, the intelligent photographing equipment may execute a method for controlling intelligent equipment, the method including:
when an image acquisition request sent from an intelligent mattress through transfer equipment is received, performing image acquisition on a position where the intelligent mattress is located to obtain a first image, the image acquisition request being triggered when a user uses the intelligent mattress;
determining eyeball information of the user and determining equipment identification information on the basis of the first image, the equipment identification information being configured to determine target intelligent equipment to be controlled; and
sending the equipment identification information and the eyeball information to the transfer equipment to enable the transfer equipment to control the target intelligent equipment on the basis of the equipment identification information and the eyeball information.

In another embodiment of the present invention, the step of determining the equipment identification information on the basis of the first image includes:
determining a sight direction of the user according to the first image; and
determining the equipment identification information on the basis of the sight direction.

In another embodiment of the present invention, the step of determining the sight direction of the user according to the first image includes:
performing face recognition on the first image to obtain a position where an eye of the user is located; and
performing sight recognition on the eye of the user to obtain the sight direction of the user on the basis of the position where the eye of the user is located.

In another embodiment of the present invention, the step of performing sight recognition on the eye of the user to obtain the sight direction of the user on the basis of the position where the eye of the user is located includes:
determining an eye pupil offset angle of an eye pupil of the user relative to a normal sight direction on the basis of the position where the eye of the user is located; and
determining the sight direction of the user on the basis of the eye pupil offset angle.

In another embodiment of the present invention, the step of determining the equipment identification information on the basis of the sight direction includes:
performing image acquisition on a position to which the sight direction points to obtain a second image, and determining the second image as the equipment identification information; or,
determining a first included angle between the sight direction and a horizontal direction, determining a second included angle between the sight direction and a specified direction, and determining the first included angle and the second included angle as the equipment identification information.

In the embodiment of the present invention, the intelligent photographing equipment may receive the image acquisition request from the intelligent mattress through the transfer equipment, perform image acquisition and determine the equipment identification information and the eyeball information through the acquired image to enable the transfer equipment to control the target intelligent equipment on the basis of the equipment identification information and the eyeball information, thereby enabling the user to control the target intelligent equipment without a remote controller, making it more convenient and easier to control the intelligent equipment and improving user experiences in control over the target intelligent equipment.

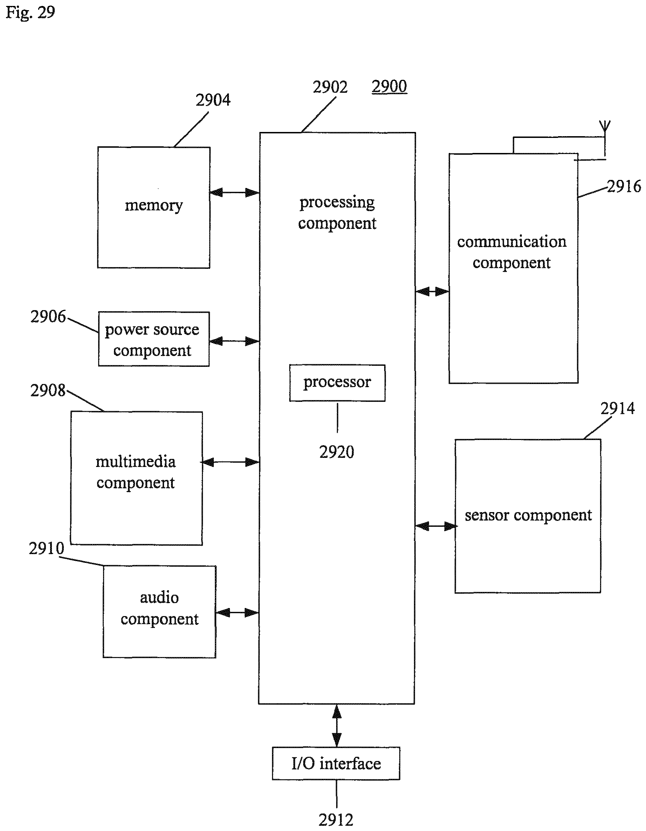

Fig. 29 is a block diagram of a device 2900 for controlling intelligent equipment according to an exemplary embodiment. For example, the device 2900 may be a mobile phone, a computer, a digital broadcast terminal, a message transeiver, a gaming console, a tablet, a medical device, fitness equipment, a personal digital assistant, an intelligent camera and the like.

Referring to Fig. 29, the device 2900 may include one or more of the following components: a processing component 2902, a memory 2904, a power source component 2906, a multimedia component 2908, an audio component 2910, an I/O interface 2912, a sensor component 2914, and a communication component 2916.

The processing component 2902 typically controls overall operations of the device 2900, such as the operations associated with display, data communications, camera operations, and recording operations. The processing component 2902 may include one or more processors 2920 to execute instructions to perform all or part of the steps in the above-mentioned methods. Moreover, the processing component 2902 may include one or more modules which facilitate interaction between the processing component 2902 and other components. For instance, the processing component 2902 may include a multimedia module to facilitate interaction between the multimedia component 2908 and the processing component 2902.

The memory 2904 is configured to store various types of data to support the operation at the device 2900. Examples of such data include messages, pictures, video, instructions for any applications or methods operated on the device 2900, etc. The memory 2904 may be implemented by any type of volatile or non-volatile memory devices, or a combination thereof, such as an SRAM, an EEPROM, an EPROM, a PROM, a ROM, a magnetic memory, a flash memory, and a magnetic or optical disk.

The power source component 2906 provides power for various components of the device 2900. The power source component 2906 may include a power management system, one or more power supplies, and other components associated with the generation, management and distribution of power for the device 2900.

The multimedia component 2908 includes a screen providing an output interface between the device 2900 and a user. In some embodiments, the screen may include an LCD and a TP. When the screen includes an TP, the screen may be implemented as a touch screen to receive an input signal from the user. The TP includes one or more touch sensors to sense touches, slides and gestures on the TP. The touch sensors may not only sense a boundary of a touch or slide action, but also sense a duration and pressure associated with the touch or slide action. In some embodiments, the multimedia component 2908 includes a front camera and/or a rear camera. The front camera and/or the rear camera may receive external multimedia data when the device 2900 is in an operation mode, such as a photographing mode or a video mode. Each of the front camera and the rear camera may be a fixed optical lens system or have focusing and optical zooming capabilities.

The audio component 2910 is configured to output and/or input an audio signal. For example, the audio component 2910 includes a MIC, and the MIC is configured to receive an external audio signal when the device 2900 is in the operation mode, such as a recording mode and a voice recognition mode. The received audio signal may be further stored in the memory 2904 or sent through the communication component 2916. In some embodiments, the audio component 2910 further includes a speaker configured to output the audio signal.

The I/O interface 2912 provides an interface between the processing component 2902 and a peripheral interface module, and the peripheral interface module may be a keyboard, a click wheel, a button and the like. The button may include, but not limited to: a home button, a volume button, a starting button and a locking button.

The sensor component 2914 includes one or more sensors configured to provide status assessment in various aspects for the device 2900. For instance, the sensor component 2914 may detect an on/off status of the device 2900 and relative positioning of components, such as a display and small keyboard of the device 2900, and the sensor component 2914 may further detect a change in a position of the device 2900 or a component of the device 2900, presence or absence of contact between the user and the device 2900, orientation or acceleration/deceleration of the device 2900 and a change in temperature of the device 2900. The sensor component 2914 may include a proximity sensor configured to detect presence of an object nearby without any physical contact. The sensor component 2914 may also include a light sensor, such as a CMOS or CCD image sensor, configured for use in an imaging application. In some embodiments, the sensor component 2914 may also include an acceleration sensor, a gyroscope sensor, a magnetic sensor, a pressure sensor or a temperature sensor.

The communication component 2916 is configured to facilitate wired or wireless communication between the device 2900 and another device. The device 2900 may access a communication-standard-based wireless network, such as a WiFi network. In an exemplary embodiment, the communication component 2916 receives a broadcast signal or broadcast associated information from an external broadcast management system through a broadcast channel. In an exemplary embodiment, the communication component 2916 further includes an NFC module to facilitate short-range communication. For example, the NFC module may be implemented on the basis of an RFID technology, an IrDA technology, a UWB technology, a BT technology and another technology.

In the exemplary embodiment, the device 2900 may be implemented by one or more ASICs, DSPs, DSPDs, PLDs, FPGAs, controllers, micro-controllers, microprocessors or other electronic components, and is configured to execute the above-mentioned methods.

In the exemplary embodiment, there is also provided a non-transitory computer-readable storage medium including an instruction, such as the memory 2904 including an instruction, and the instruction may be executed by the processor 2920 of the device 2900 to implement the above-mentioned methods. For example, the non-transitory computer-readable storage medium may be a ROM, a RAM, a CD-ROM, a magnetic tape, a floppy disc, an optical data storage device and the like.

A non-transitory computer-readable storage medium is provided, when the instructions in the storage medium are executed by a processor of intelligent photographing equipment, the intelligent photographing equipment may execute a method for controlling intelligent equipment, the method including:
when an image acquisition request sent from an intelligent mattress through transfer equipment is received, performing image acquisition on a position where the intelligent mattress is located to obtain a first image, the image acquisition request being triggered when a user uses the intelligent mattress;
determining eyeball information of the user; and
sending the first image and the eyeball information to the transfer equipment to enable the transfer equipment to control target intelligent equipment on the basis of the first image and the eyeball information.

In another embodiment of the present invention, after the step of sending the first image and the eyeball information to the transfer equipment, the method further includes:
when a sight direction sent by the transfer equipment is received, performing image acquisition on a position to which the sight direction points to obtain a second image, the sight direction being obtained by analyzing the first image by the transfer equipment; and
sending the second image to the transfer equipment.

In the embodiment of the present invention, the intelligent photographing equipment may receive the image acquisition request from the intelligent mattress through the transfer equipment, perform image acquisition and determine the eyeball information through the acquired image to enable the transfer equipment to control the target intelligent equipment on the basis of the acquired image and the eyeball information, thereby enabling the user to control the target intelligent equipment without a remote controller, making it more convenient and easier to control the intelligent equipment and improving user experiences in control over the target intelligent equipment.

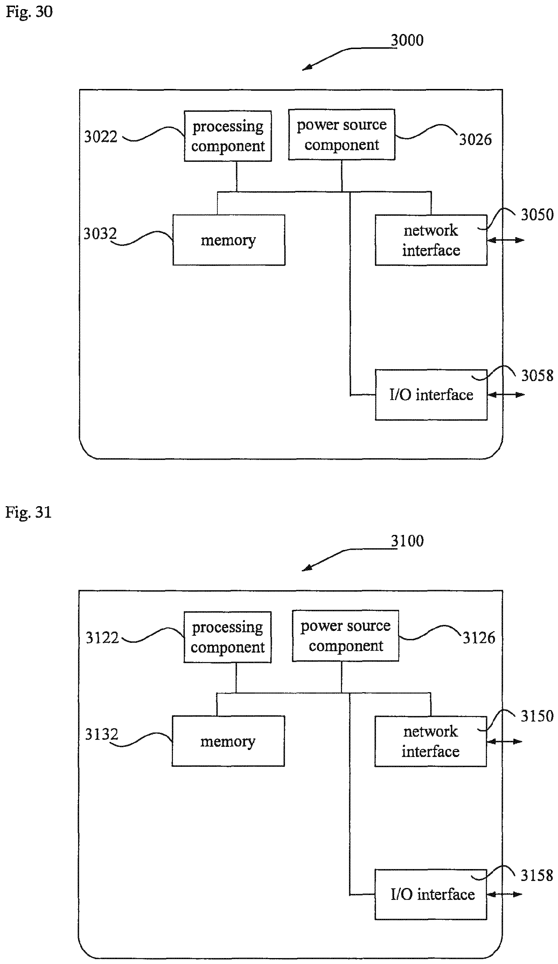

Fig. 30 is a block diagram of a device 3000 for controlling intelligent equipment according to an exemplary embodiment. For example, the device 3000 may be provided as transfer equipment. Referring to Fig. 30, the device 3000 includes a processing component 3022 which further includes one or more processors, and a memory resource represented by a memory 3032, configured to store instructions such as application programs executable by the processing component 3022. The application programs stored in the memory 3032 may include one or more than one module which each corresponds to a set of instructions.

The device 3000 may further include a power source component 3026 configured to execute power mangement of the device 3000, a wired or wireless network interface 3050 configured to connect the device 3000 to a network, and an I/O interface 3058. The device 3000 may be operated on the basis of an operating system stored in the memory 3032, such as Windows ServerTM, Mac OS XTM, UnixTM, LinuxTM or FreeBSDTM.

In addition, the processing component 3022 is configured to execute the instructions to execute the following method, including:
receiving an image acquisition request from an intelligent mattress, the image acquisition request containing an ID of the intelligent mattress and the image acquisition request being triggered when a user uses the intelligent mattress;
sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, the equipment identification information being configured to determine target intelligent equipment to be controlled; and
controlling the target intelligent equipment on the basis of the equipment identification information and the eyeball information.

In another embodiment of the present invention, the step of controlling the target intelligent equipment on the basis of the equipment identification information and the eyeball information includes:
determining the target intelligent equipment on the basis of the equipment identification information; and
controlling the target intelligent equipment on the basis of the eyeball information.

In another embodiment of the present invention, the step of determining the target intelligent equipment on the basis of the equipment identification information includes:
when the equipment identification information is a second image, selecting a target image matched with the second image from a stored image library, the second image being obtained by performing image acquisition on a position to which a sight direction points by the intelligent photographing equipment; and
determining intelligent equipment in the target image as the target intelligent equipment.

In another embodiment of the present invention, the step of determining the target intelligent equipment on the basis of the equipment identification information includes:
when the equipment identification information is the second image, recognizing an equipment mark of the intelligent equipment in the second image from the second image;
acquiring a corresponding intelligent equipment ID from a stored corresponding relationship between an equipment mark and an intelligent equipment ID on the basis of the equipment mark; and
determining intelligent equipment corresponding to the acquired intelligent equipment ID as the target intelligent equipment.

In another embodiment of the present invention, the step of determining the target intelligent equipment on the basis of the equipment identification information includes:
when the equipment identification information is a first included angle and a second included angle, acquiring a corresponding intelligent equipment ID from a stored corresponding relationship among a first included angle, a second included angle and an intelligent equipment ID on the basis of the first included angle and the second included angle, the first included angle being an included angle between the sight direction of the user and a horizontal direction and the second included angle being an included angle between the sight direction and a specified direction; and
determining intelligent equipment corresponding to the acquired intelligent equipment ID as the target intelligent equipment.

In another embodiment of the present invention, the step of controlling the target intelligent equipment on the basis of the eyeball information includes:
acquiring corresponding control operation from a stored corresponding relationship between eyeball information and control operation on the basis of the eyeball information; and
controlling the target intelligent equipment on the basis of the acquired control operation.

In the embodiment of the present invention, the transfer equipment may receive the image acquisition request from the intelligent mattress, send the request to the intelligent photographing equipment, receive the equipment identification information and eyeball information returned by the intelligent photographing equipment on the basis of the acquired image and control the target intelligent equipment on the basis of the equipment identification information and the eyeball information, so that the user may control the target intelligent equipment without a remote controller, the intelligent equipment may be controlled more conveniently and easily, and user experiences in control over the target intelligent equipment are improved.

Fig. 31 is a block diagram of a device 3100 for controlling intelligent equipment according to an exemplary embodiment. For example, the device 3100 may be provided as transfer equipment. Referring to Fig. 31, the device 3100 includes a processing component 3122, which further includes one or more processors, and a memory resource represented by a memory 3132 configured to store instructions such as application programs executable by the processing component 3122. The application programs stored in the memory 3132 may include one or more than one module which each corresponds to a set of instructions.

The device 3100 may further include a power source component 3126 configured to execute power mangement of the device 3100, a wired or wireless network interface 3150 configured to connect the device 3000 to a network, and an I/O interface 3158. The device 3100 may be operated on the basis of an operating system stored in the memory 3132, such as Windows ServerTM, Mac OS XTM, UnixTM, LinuxTM or FreeBSDTM.

In addition, the processing component 3122 is configured to execute the instructions to execute the following method, including:
receiving an image acquisition request from an intelligent mattress, the image acquisition request containing an ID of the intelligent mattress and the image acquisition request being triggered when a user uses the intelligent mattress;
sending the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
controlling target intelligent equipment on the basis of the first image and the eyeball information.

In another embodiment of the present invention, the step of controlling the target intelligent equipment on the basis of the first image and the eyeball information includes:
determining a sight direction of the user according to the first image;
determining the target intelligent equipment on the basis of the sight direction; and
controlling the target intelligent equipment on the basis of the eyeball information.

In another embodiment of the present invention, the step of determining the sight direction of the user according to the first image includes:
performing face recognition on the first image to obtain a position where an eye of the user is located; and
performing sight recognition on the eye of the user to obtain the sight direction of the user on the basis of the position where the eye of the user is located.

In another embodiment of the present invention, the step of performing sight recognition on the eye of the user to obtain the sight direction of the user on the basis of the position where the eye of the user is located includes:
determining an eye pupil offset angle of an eye pupil of the user relative to a normal sight direction on the basis of the position where the eye of the user is located; and
determining the sight direction of the user on the basis of the eye pupil offset angle.

In another embodiment of the present invention, the step of determining the target intelligent equipment on the basis of the sight direction includes:
determining a first included angle between the sight direction and a horizontal direction, and determining a second included angle between the sight direction and a specified direction;
acquiring a corresponding intelligent equipment ID from a stored corresponding relationship among a first included angle, a second included angle and an intelligent equipment ID on the basis of the first included angle and the second included angle; and
determining intelligent equipment corresponding to the acquired intelligent equipment ID as the target intelligent equipment.

In another embodiment of the present invention, the step of determining the target intelligent equipment on the basis of the sight direction includes:
sending the sight direction to the intelligent photographing equipment to enable the intelligent photographing equipment to perform image acquisition on a position to which the sight direction points to obtain a second image and return the second image; and
when the second image returned by the intelligent photographing equipment is received, determining the target intelligent equipment on the basis of the second image.

In another embodiment of the present invention, the step of determining the target intelligent equipment on the basis of the second image includes:
selecting a target image matched with the second image from a stored image library; and
determining intelligent equipment in the target image as the target intelligent equipment.

In another embodiment of the present invention, the step of determining the target intelligent equipment on the basis of the second image includes:
recognizing from the second image an equipment mark of the intelligent equipment in the second image;
acquiring a corresponding intelligent equipment ID from a stored corresponding relationship between an equipment mark and an intelligent equipment ID on the basis of the equipment mark; and
determining intelligent equipment corresponding to the acquired intelligent equipment ID as the target intelligent equipment.

In another embodiment of the present invention, the step of controlling the target intelligent equipment on the basis of the eyeball information includes:
acquiring corresponding control operation from a stored corresponding relationship between eyeball information and control operation on the basis of the eyeball information; and
controlling the target intelligent equipment on the basis of the acquired control operation.

In the embodiment of the present invention, the transfer equipment may receive the image acquisition request from the intelligent mattress, send the request to the intelligent photographing equipment, receive the acquired image and eyeball information returned by the intelligent photographing equipment and control the target intelligent equipment on the basis of the image and the eyeball information, so that the user may control the target intelligent equipment without a remote controller, the intelligent equipment may be controlled more conveniently and easily, and user experiences in control over the target intelligent equipment are improved.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction described above and illustrated in the accompanying drawings, and that various modifications and changes may be made without departing from the scope thereof. The scope of the present invention is only limited by the appended claims.

### INDUSTRY APPLICABILITY

According to the embodiments of the present invention, interaction among an intelligent mattress, intelligent photographing equipment and target intelligent equipment is implemented through transfer equipment, and then the intelligent mattress acquires an image, and acquires equipment identification information and eyeball information from the acquired image to implement control over the target intelligent equipment on the basis of the equipment identification information and the eyeball information, so that a user may control the target intelligent equipment without a remote controller, and user experiences in control over the target intelligent equipment are improved.

## Claims

1. A method for controlling intelligent equipment, comprising:
receiving (401) an image acquisition request sent from an intelligent mattress, wherein the image acquisition request containing an identifier, ID, of the intelligent mattress and the image acquisition request being triggered when a user uses the intelligent mattress;
sending (402) the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return eyeball information of the user and equipment identification information determined on the basis of the first image, wherein the equipment identification information being configured to determine target intelligent equipment to be controlled; and
controlling (403) the target intelligent equipment on the basis of the equipment identification information and the eyeball information.

2. The method according to claim 1, wherein the step of controlling (403) the target intelligent equipment on the basis of the equipment identification information and the eyeball information comprises:
determining the target intelligent equipment on the basis of the equipment identification information; and
controlling the target intelligent equipment on the basis of the eyeball information.

3. The method according to claim 2, wherein the step of determining the target intelligent equipment on the basis of the equipment identification information comprises:
when the equipment identification information is a second image, selecting a target image matched with the second image from a stored image library, wherein the second image being obtained by performing image acquisition on a position to which a sight direction points by the intelligent photographing equipment; and
determining intelligent equipment in the target image as the target intelligent equipment.

4. A method for controlling intelligent equipment, comprising:
receiving (501) an image acquisition request from an intelligent mattress, wherein the image acquisition request containing an identifier, ID, of the intelligent mattress and the image acquisition request being triggered when a user uses the intelligent mattress;
sending (502) the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return the first image and eyeball information of the user; and
controlling (503) target intelligent equipment on the basis of the first image and the eyeball information.

5. The method according to claim 4, wherein the image acquisition request is sent from the intelligent mattress through transfer equipment.

6. The method according to claim 4 or 5, wherein the step of controlling the target intelligent equipment on the basis of the first image and the eyeball information comprises:
determining a sight direction of the user according to the first image;
determining the target intelligent equipment on the basis of the sight direction; and
controlling the target intelligent equipment on the basis of the eyeball information.

7. The method according to claim 6, wherein the step of determining the sight direction of the user according to the first image comprises:
performing face recognition on the first image to obtain a position where an eye of the user is located; and
performing sight recognition on the eye of the user to obtain the sight direction of the user on the basis of the position where the eye of the user is located.

8. The method according to claim 7, wherein the step of performing the sight recognition on the eye of the user to obtain the sight direction of the user on the basis of the position where the eye of the user is located comprises:
determining an eye pupil offset angle of an eye pupil of the user relative to a normal sight direction on the basis of the position where the eye of the user is located; and
determining the sight direction of the user on the basis of the eye pupil offset angle.

9. The method according to claim 8, wherein the step of determining the target intelligent equipment on the basis of the sight direction comprises:
determining a first included angle between the sight direction and a horizontal direction, and determining a second included angle between the sight direction and a specified direction;
acquiring a corresponding intelligent equipment ID from a stored corresponding relationship among a first included angle, a second included angle and an intelligent equipment ID on the basis of the first included angle and the second included angle; and
determining intelligent equipment corresponding to the acquired corresponding intelligent equipment ID as the target intelligent equipment.

10. The method according to claim 6, wherein the step of determining the target intelligent equipment on the basis of the sight direction comprises:
sending the sight direction to the intelligent photographing equipment to enable the intelligent photographing equipment to perform image acquisition on a position to which the sight direction points to obtain a second image and return the second image; and
when the second image returned by the intelligent photographing equipment is received, determining the target intelligent equipment on the basis of the second image.

11. The method according to claim 10, wherein the step of determining the target intelligent equipment on the basis of the second image comprises:
selecting a target image matched with the second image from a stored image library; and
determining intelligent equipment in the target image as the target intelligent equipment.

12. The method according to claim 10, wherein the step of determining the target intelligent equipment on the basis of the second image comprises:
recognizing, from the second image, an equipment mark of intelligent equipment in the second image;
acquiring a corresponding intelligent equipment ID from a stored corresponding relationship between an equipment mark and an intelligent equipment ID on the basis of the equipment mark; and
determining intelligent equipment corresponding to the acquired corresponding intelligent equipment ID as the target intelligent equipment.

13. The method according to claim 6 or claim 2, wherein the step of controlling the target intelligent equipment on the basis of the eyeball information comprises:
acquiring corresponding control operation from a stored corresponding relationship between eyeball information and control operation on the basis of the eyeball information; and
controlling the target intelligent equipment on the basis of the acquired corresponding control operation.

14. A device for controlling intelligent equipment, comprising:
a receiving module (1601,2201), configured to receive an image acquisition request sent from an intelligent mattress, wherein the image acquisition request containing an identifier, ID, of the intelligent mattress and the image acquisition request being triggered when a user uses the intelligent mattress;
a sending module (1602,2202), configured to send the image acquisition request to intelligent photographing equipment bound with the intelligent mattress determined on the basis of the ID of the intelligent mattress to enable the intelligent photographing equipment to perform image acquisition on a position where the intelligent mattress is located to obtain a first image and return:
- either the first image and eyeball information of the user; or
- eyeball information of the user and equipment identification information determined on the basis of the first image, the equipment identification information being configured to determine target intelligent equipment to be controlled; and
a control module (1603,2203), configured to control the target intelligent equipment on the basis of the equipment identification information and the eyeball information.

15. A device for controlling intelligent equipment, comprising:
a processor (3032,3132); and
a memory configured to store instructions executable by the processor,
wherein the processor is configured to execute the steps of a method for controlling intelligent equipment according to any of claims 1 to 13.
